(19) Europäisches Patentamt
European Patent Office
Office européen des brevets

(11) EP 2 257 344 B1

(12) EUROPEAN PATENT SPECIFICATION

(45) Date of publication and mention of the grant of the patent:
**14.11.2012 Bulletin 2012/46**

(51) Int Cl.:
*A62C 2/00* *(2006.01)*       *C08J 5/18* *(2006.01)*
*B32B 9/00* *(2006.01)*       *C09J 7/02* *(2006.01)*
*C01B 31/04* *(2006.01)*

(21) Application number: **09719099.5**

(22) Date of filing: **13.03.2009**

(86) International application number:
**PCT/US2009/001592**

(87) International publication number:
**WO 2009/114174 (17.09.2009 Gazette 2009/38)**

(54) **USE OF A GRAPHITIZED SHEET FOR FIRE BARRIER PROTECTION**

VERWENDUNG EINER GRAPHITISIERTEN FOLIE ALS FEUERSCHUTZBARRIERE

UTILISATION DES FILMS TRAITÉS AU GRAPHITE COMME PROTECTION COUPE-FEU

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.03.2008 US 69528 P**
**19.09.2008 US 192636 P**

(43) Date of publication of application:
**08.12.2010 Bulletin 2010/49**

(73) Proprietor: **Kaneka Corporation**
**Osaka-shi, Osaka 530-8288 (JP)**

(72) Inventors:
• **ONO, Kazuhiro**
**Houston**
**TX 77062 (US)**

• **NISHIKAWA, Yasushi**
**Osaka 566-0072 (JP)**
• **INADA, Takashi**
**Osaka 566-0072 (JP)**

(74) Representative: **TBK**
**Bavariaring 4-6**
**80336 München (DE)**

(56) References cited:
**WO-A1-2008/149920       US-A- 4 935 281**
**US-A- 6 143 218          US-A1- 2007 032 589**
**US-A1- 2008 050 305      US-B1- 6 245 400**
**US-B1- 6 670 291**

**Description**

The present invention relates to fire barrier protection. More specifically, the present invention relates to fire barrier protection comprising a graphitized sheet.

Laminate sheet materials for fire barrier applications are described in US Patent No. 6,670,291. The laminate comprises a first layer comprised of polymeric material and a second layer comprised of non-metallic fibers. See the Abstract. The second layer may be, for example a laminate may comprise vermiculite coated paper having metal oxide coated regions thereon, available from the 3M Company under the trade designation "NEXTEL Flame Stopping Dot Paper." See column 17, lines 50-55.

Flexible graphite prepared from natural graphite is a well-known material used in a variety of industrial, commercial and domestic applications because of its chemical inertness and unique electrical and thermal conduction properties. It is of particular use as a gasketing or sealing material in automobile engines, piping flanges and vessel joints and as a fire proof covering for walls or floors. See US Patent No. 6,245,400.

A method for making expandable graphite particles is described in U.S. Pat. No. 3,404,061, wherein graphite flakes are intercalated by dispersing the flakes in a solution containing an oxidizing agent e.g., a mixture of nitric and sulfuric acid. Upon exposure to high temperature, the particles of intercalated graphite expand in dimension as much as 80 to 1000 or more times its original volume in an accordion-like fashion in the c-direction, i.e. in the direction perpendicular to the crystalline planes of the constituent graphite particles. The exfoliated graphite particles are vermiform in appearance, and are therefore commonly referred to as worms. The worms, i.e. expanded graphite, may be compressed together into flexible sheets which, unlike the original graphite flakes, can be formed and cut into various shapes for gasket and sealing purposes.

An alternative embodiment of a flexible graphite sheet is made in U.S. Pat. No. 6,143,218 by compressing a mixture of fine particles of intercalated, exfoliated, expanded natural graphite with fine particles of intercalated, unexpanded, expandable particles of natural graphite, the unexpanded particles being more finely sized than the expanded particles. The resulting sheet of flexible graphite is stated to exhibit improved fire retardant and sealability properties.

Filmy graphite materials are described in US Patent Application No. 2007/0032589 (the "'589 application"). In the background section of this application, it is pointed out that a process has been developed in which a special polymer film is graphitized by direct heat treatment (hereinafter, referred to as a "polymer graphitization process"). Examples of the polymer film used for this purpose include films containing polyoxadiazole, polyimide, polyphenylenevinylene, polybenzimidazole, polybenzoxazole, polythiazole, or polyamide. The '589 application goes on to describe a method for providing a thick filmy graphite having excellent physical properties using a short-time heat treatment at relatively low temperatures. In this application, it was noted that by controlling the molecular structure and molecular orientation of the polyimide (particularly the birefringence or coefficient of linear expansion), transformation into a quality graphite is enabled. The filmy graphite materials described in the '589 application are stated to be "important as industrial materials because of their excellent heat resistance, chemical resistance, high thermal conductivity, and high electrical conductivity, and are widely used as heat-dissipating materials, heat-resistant sealing materials, gaskets, heating elements, etc." See paragraph [0002].

Further, US 2008/050305 A1 discloses a process for producing a graphite film, including graphitizing a raw material film of a polymer film and/or carbonized polymer film. US 4935281 A discloses flame barrier office building materials.

The present invention relates to a use according to claim 1. Further beneficial embodiments are set forth in the dependent claims.

While flexible graphitized polymer sheets have been identified as being useful for dissipating heat, e.g. in electronic device applications such as cellphones, such sheets have not heretofore been recognized to exhibit superior fire barrier protection. It has surprisingly been found that graphitized polymer sheets provide exceptional fire barrier performance with additional benefits not obtained using natural graphite sheet constructions. Therefore, superior fire barrier systems may be provided when the system comprises a flexible graphitized polymer sheet. Such systems exhibit superior fire barrier properties, while at the same time providing substantial reduction in weight and/or bulk of the fire barrier system.

Fire barrier systems comprising a flexible graphitized polymer sheet are particularly beneficial, because they exhibit little or no flame penetration because the graphitized polymer sheet is a continuous film. Further, the graphitized polymer sheet has a very low weight. It has been discovered that the present invention using graphitized polymer sheet, as distinguished from a graphite sheet prepared from natural graphite, provides a particular advantage, because the graphitized polymer sheet exhibits less outgassing and moisture absorbance, and also can effectively be prepared at lower sheet weights. Advantageously, the graphitized polymer sheet does not utilize sulfuric acid in the production process, as compared to the manufacturing process in preparation of natural graphite sheets. Some of the problems arising from materials made using sulfuric acid include that hazardous outgases are released when the sheet is exposed to heat or when moisture absorption occurs. Additionally, when metals come into contact with the natural graphite sheet, the metals experience a much faster rate of corrosion as compared to graphite sheets made by the polymer graphitization process.

Fire barrier systems comprising a flexible graphitized sheet exhibit exceptional performance as compared to prior art ceramic paper fire barriers, because graphite films as described herein remain flexible even after 6 minutes of flame exposure.

The accompanying drawings, which are incorporated in and constitute a part of this application, illustrate several aspects of the invention and together with a description of the embodiments serve to explain the principles of the invention. A brief description of the drawings is as follows:

FIG. 1 is a cross sectional view of an insulation bag comprising a flexible graphitized sheet.

FIG. 2 is a cross sectional view of another embodiment of an insulation bag comprising a flexible graphitized sheet.

FIG. 3 is a cross sectional view of another embodiment of an insulation bag comprising a flexible graphitized sheet.

FIG. 4 is a cross sectional view of a self-adhering construction comprising a graphitized polymer sheet.

FIG. 5 is a cross sectional side view of a structure having an insulative construction and fire barrier affixed thereto.

Fig. 6 and 7 are photographs of a flame test showing flame barrier properties of 25 $\mu$m Graphitized polyimide sheet.

Fig. 8 and 9 are photographs of a flame test showing flame barrier properties of 40 $\mu$m Graphitized polyimide sheet.

Fig. 10 is a result of burn-through test showing Heat Flux.

Fig. 11 - 14 are results of picture frame tests showing the temperatures of the sheet surfaces.

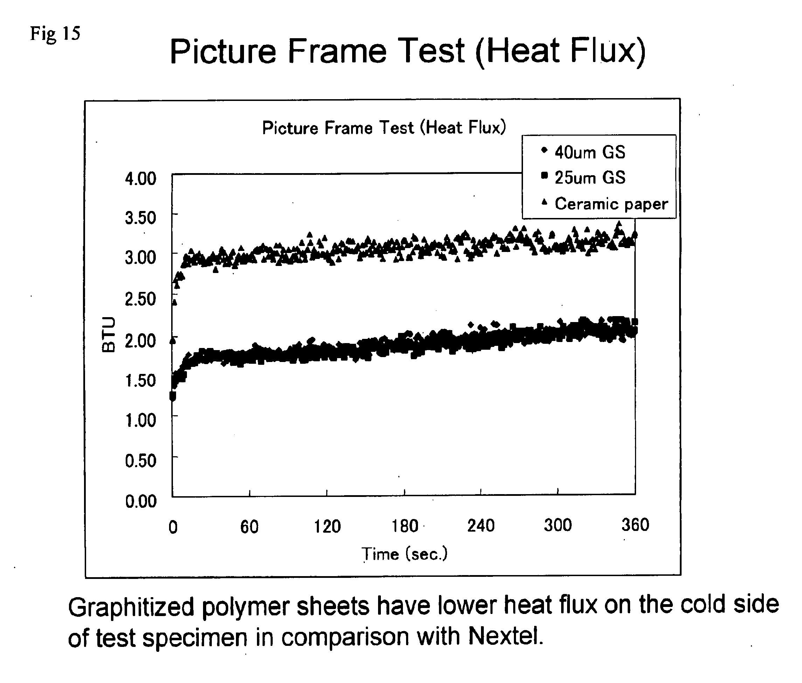

Fig. 15 is a result of a picture flame test showing Heat Flux.

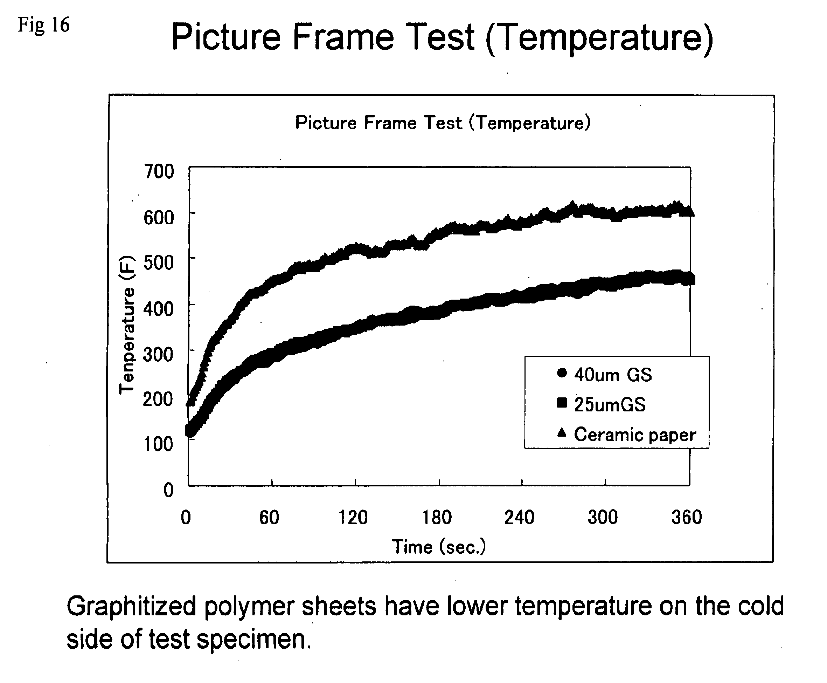

Fig. 16 is a result of a picture flame test showing the temperature.

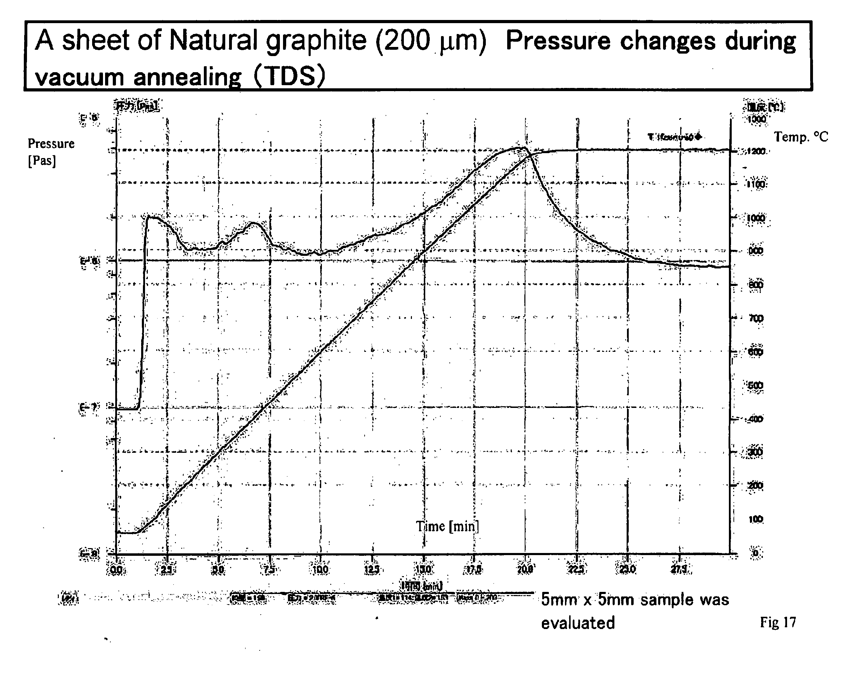

Fig. 17 shows pressure changes during vacuum annealing for a sheet of natural graphite.

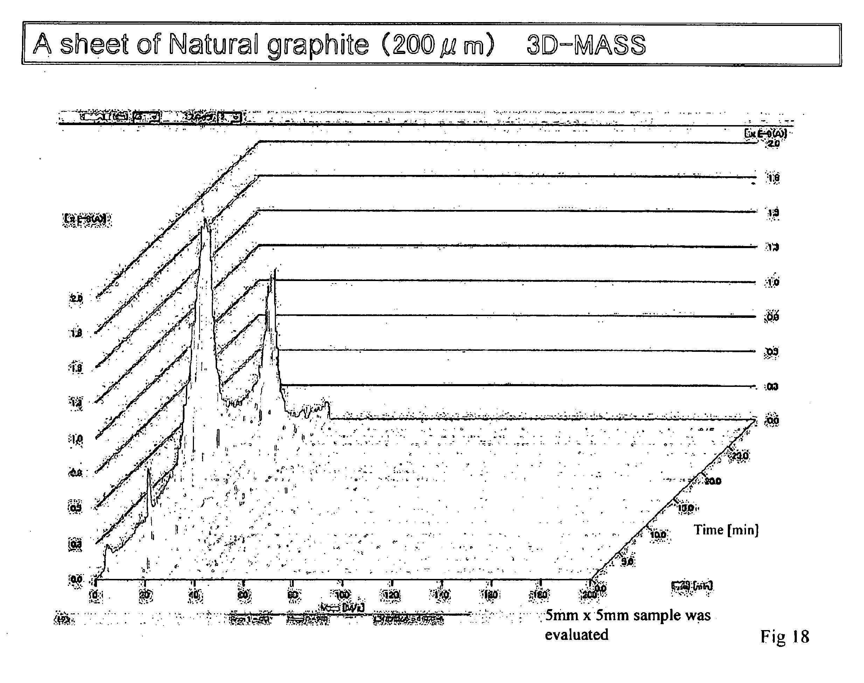

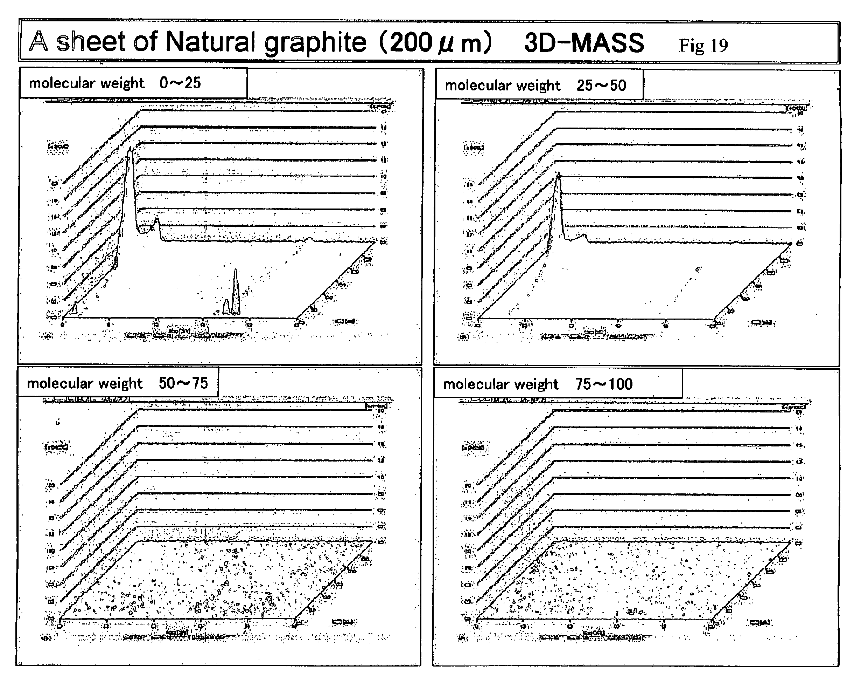

Fig. 18 and 19 are results of 3d-MASS for a sheet of natural graphite.

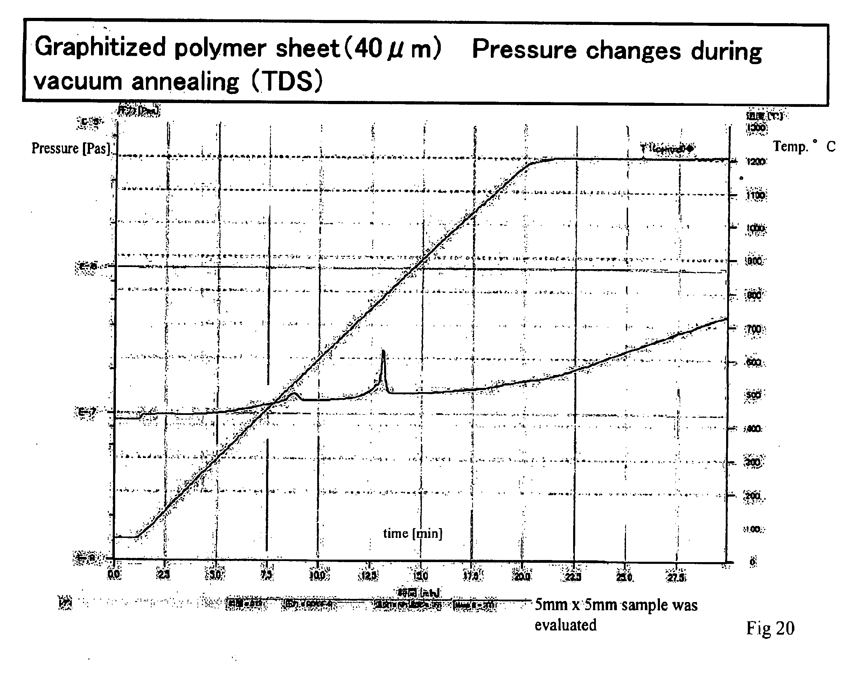

Fig. 20 shows pressure changes during vacuum annealing for graphitized polymer sheet.

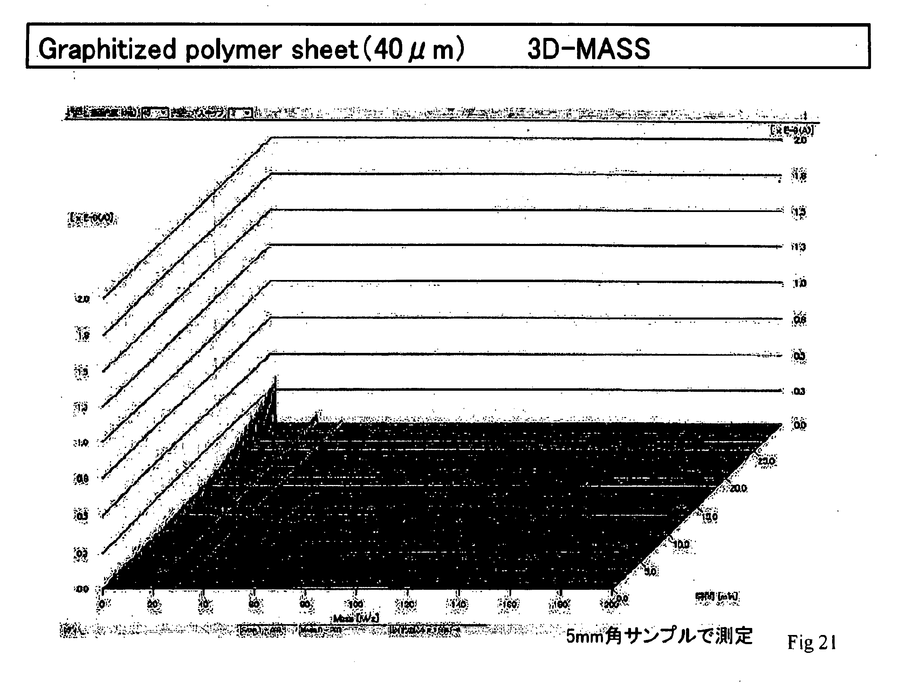

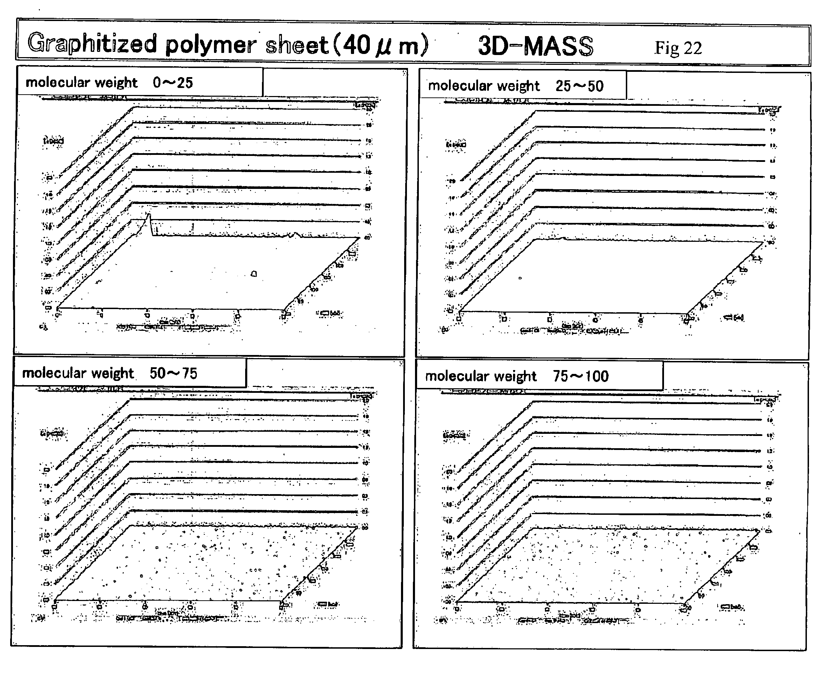

Fig. 21 and 22 are results of 3d-MASS for graphitized polymer sheet.

Fig. 23 is a result of TG analysis for a sheet of natural graphite.

Fig. 24 is a result of TG analysis for graphitized polymer sheet

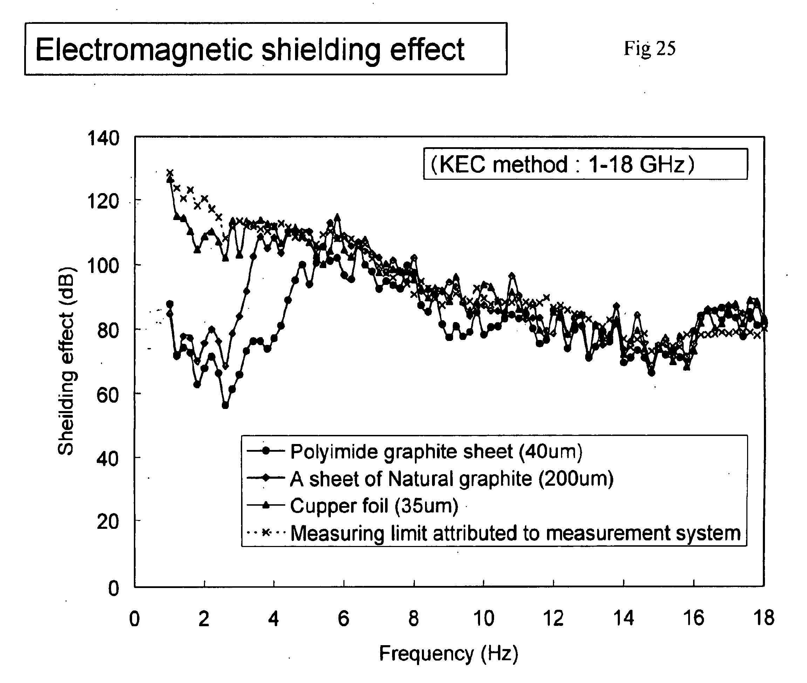

Fig. 25 is a result of Electromagnetic shielding effect.

The embodiments of the present invention described below are not intended to be exhaustive or to limit the invention to the precise forms disclosed in the following detailed description. Rather a purpose of the embodiments chosen and described is so that the appreciation and understanding by others skilled in the art of the principles and practices of the present invention can be facilitated.

A flexible graphitized polymer sheet is continuous film of graphite. Preferably the flexible graphitized polymer sheet has a weight of from about 20 to about 250 g/m$^2$, preferably about 50 to about 70 g/m$^2$. Preferably, the flexible graphitized polymer sheet has a thickness of from about 5 to about 60 $\mu$m, more preferably 10 to about 50 $\mu$m and most preferably 15 to about 40 $\mu$m. Preferably, the flexible graphitized polymer sheet has an electrical conductivity of at least about 10000, preferably at least about 1.2x 10$^4$ S/cm. The graphite sheet has an MIT folding endurance of 1000 times or more, preferably 10000 times or more. It may be difficult to reduce the thickness of the natural graphite itself. The typical natural graphite sheet has a thickness of at least 50 $\mu$m and MIT folding endurance of at least 5000. Therefore, use of the graphitized polymer sheet provides benefits in terms of lightweight and excellent flexibility.

The flexible graphitized polymer sheet is prepared by heat treating in a polymer graphitization process. In this process, a polymer is heated to a high temperature for a time sufficient to transform the polymer film into a graphite film. In an embodiment of the present invention the polymer used as the starting material for subsequent transformation into a graphite film is selected from the group consisting of polyoxadiazoles, polybenzothiazole, polybenzobisthiazole, polybenzoxazole, polybenzobisoxazole, various kinds of polyimides, various kinds of polyamides, polyphenylenebenzoimidazole, polythiazole, polyparaphenylenevinylene, poly(p-phenyleneisophthalamide), poly(m-phenylenebenzoimidazole), and poly(phenylenebenzobisimidazole).

In a more preferred embodiment, the flexible graphitized polymer sheet is prepared by heat treating a polyimide film in a polymer graphitization process.

The process of polymer graphitization will now be discussed in more detail, first by discussing the preparation of the preferred polyimide film starting material.

The preferred polyimide film to be used in the invention can be produced by publicly known methods as disclosed, for example, in "Journal of Polymer Science: part A vol. 3, pp. 1373-1390 (1965)". Namely, it can be obtained by casting or applying a polyamic acid onto a substrate, followed by chemical or thermal imidization. Chemical imidization is preferred from the viewpoints of the toughness, breaking strength and productivity of the film.

As the polyamic acid serving as the precursor of the polyimide to be used in the invention, use can be fundamentally made of any known polyamic acid. The polyamic acid to be used in the invention is produced usually by dissolving at least one aromatic acid dianhydride and at least one diamine in a substantially equimolar amount of an organic solvent and stirring, under controlled temperature conditions, the thus obtained solution of the polyamic acid in the organic solvent until the polymerization of the acid dianhydride and the diamine is completed.

The polyimide is obtained by imidizing the polyamic acid. The imidization may be performed either by the heat cure method or by the chemical cure method. In the heat cure method, the imidization reaction proceeds under heating without resort to any dehydrocyclization agent. In the chemical cure method, on the other hand, the organic solvent solution of the polyamic acid is treated with a chemical converting agent typified by an acid anhydride such as acetic anhydride (a dehydrating agent) and a catalyst typified by a tertiary amine such as isoquinoline, $\beta$-picoline or pyridine. It is also possible to employ the chemical cure method together with the heat cure method. The imidization conditions may vary depending on, for example, the type of the polyamic acid, the film thickness and the cure method selected (i.e., the heat cure method and/or the chemical cure method).

Next, materials employed in the polyamic acid composition serving as the polyimide precursor according to the invention will be described. Examples of the acid anhydride appropriately usable in the polyimide of the invention include pyromellitic acid dianhydride, 2,3,6,7-naphthalenetetracarboxylic acid dianhydride, 3,3',4,4'-biphenyltetracraboxylic acid dianhydride, 1,2,5,6-naphthalenetetracarboxylic acid dianhydride, 2,2',1,3,31'-biphenyltetracarboxylic acid dianhydride, 3,3',4,4'-benzophenonetetracarboxylic acid dianhydride, 2,2-bis(3,4-dicarboxyphenyl) propane dianhydride, 3,4,9,10-perylenetetracarboxylic acid dianhydride, bis(3,4-dicarboxyphenyl)propane dianhydride, 1,1-bis(2,3-dicarboxyphenyl) ethane dianhydride, 1,1-bis(3,4-dicarboxyphenyl)ethane dianhydride, bis(2, 3-dicarboxyphenyl)methane dianhydride, bis(3,4-dicarboxyphenyl)ethane dianhydride, oxydiphthalic acid dianhydride, bis(3,4-dicarboxyphenyl) sulfone dianhydride, p-phenylenebis (trimellitic acid monoester acid anhydride), ethylenebis(trimellitic acid monoester acid anhydride), bisphenol A bis (trimellitic acid monoester acid anhydride) and analogs thereof.

Examples of the diamines appropriately usable in the polyimide composition of the invention include 4,4'-diaminodiphenylpropane, 4,4'-diaminodiphenylmethane, benzidine, 3,3'-dichlorobenzidine, 4,4'-diaminodiphenylsulfide, 3,3'-diaminodiphenylsulfone, 4,4'-diaminodiphenylsulfone, 4,4'-diaminodiphenyl ether, 3,3'-diaminodiphenyl ether, 3,41-diaminodiphenyl ether, 1,5-diaminonaphthalene, 4,4'-diaminodiphenyldiethylsilane, 4,4'-diaminodiphenylsilane, 4,4'-diaminodiphenylethylphosphine oxide, 4,4,-diaminodiphenyl N-methylamine, 4,4,-diaminodiphenyl N-phenylamine, 1,4-diaminobenzene (p-phenylenediamine), 1,3-diaminobenzene, 1,2-diaminobenzene and analogs thereof.

Preferable examples of the solvent to be used in synthesizing the polyamic acid include amide type solvents such as N,N-dimethylformamide, N,N-dimethylacetamide and N-methyl-2-pyrrolidone. Among all, N,N-dimethylformamide is particularly preferable therefor.

In the case of performing the imidization by the chemical cure method, examples of the chemical converting agent to be added to the polyamic acid composition of the invention include aliphatic acid anhydrides, aromatic acid anhydrides, N,N'-dialkylcarbodiimides, lower aliphatic halides, halogenated lower aliphatic halides, halogenated lower fatty acid anhydrides, arylsulfonic acid dihalides, thionyl halides and mixtures of two or more thereof. Among these converting agents, it is preferable to use an aliphatic acid anhydride (for example, acetic anhydride, propionic anhydride, lactic anhydride) or a mixture of two or more thereof.

It is preferable that the chemical converting agent is used in an amount 1 to 10 times, more preferably 1 to 7 times, and most preferably 1 to 5 times larger than the number of moles at the polyamic acid site in the polyamic acid solution.

To effectively carry out the imidization, it is preferable to add the chemical converting agent together with a catalyst. As the catalyst, use can be made of, for example, aliphatic tertiary amines, aromatic tertiary amines and heterocyclic tertiary amines. Among all, those selected from the heterocyclic tertiary amines are particularly preferable. That is, preferable examples of the catalyst include quinoline, isoquinoline, $\beta$-picoline and pyridine.

The catalyst is added in an amount of {fraction (1/20)} to 10 times, preferably {fraction (1/15)} to 5 times and more preferably {fraction (1/10)} to 2 times larger than the number of moles of the chemical converting agent.

When the chemical converting agent and the catalyst are used in insufficient amounts, the imidization cannot proceed effectively. When these additives are used too much, on the contrary, the imidization proceeds quickly thereby deteriorating the handling properties.

The polyamic acid solution thus obtained usually contains from 10 to 30% by weight of the polyamic acid in terms of solid matter. When the concentration thereof falls within this range, an appropriate molecular weight and an appropriate solution viscosity can be obtained.

Now, the chemical cure method will be described in detail. The polyamic acid composition obtained above is mixed with a chemical converting agent and a catalyst is added. Then the resultant mixture is cast onto a casting face to give a film. Next, it is generally heated to, for example, about 80 to about 100° C. so that the chemical converting agent and the catalyst are activated and the cast film is converted onto a polyamic acid/polyimide gel film (hereinafter referred to as the gel film). Heating duration is determined according to the thickness. Preferably, it is heated for about 30 seconds to about 10 minutes.

Subsequently, the gel film thus obtained is heated thereby removing moisture and the remaining solvent and chemical converting agent and simultaneously converting the polyamic acid into polyimide.

It is preferable, for example, in the continuous process that the gel film is held at both ends with tender clips or pins in the entering step.

To dry and imidate the film, it is preferable that the film is heated gradually and continuously and a high temperature is employed within a short period of time in the final heating stage, as commonly performed in the art. More particularly speaking, it is preferable to heat the film to 400 to 550° C. for 15 to 500 seconds in the final stage. When the final heating is performed at a higher temperature or for a longer time, there arises a problem of the heat deterioration of the film. When the final heating is performed at a lower temperature or for a shorter time, on the contrary, no desired effect can be established.

Next, the method for obtaining a polyimide film by applying a solution of a compound to a partly cured or partly dried polyamic acid film or polyimide film, or immersing the film in the solution, followed by drying by heating will be illustrated.

The partly cured or partly dried polyamic acid film or polyimide film (hereinafter referred to as the gel film) can be produced by a publicly known method. Namely, the polyamic acid is cast or applied onto a substrate followed by heat imidization.

Alternatively, a chemical converting agent and a catalyst are mixed with the polyamic acid solution and then the resultant solution is cast onto a substrate to give a film. Next, the chemical converting agent and the catalyst are activated by heating to about 100° C. Thus a gel film having been cured to such an extent as having self-supporting properties can be obtained.

The gel film is in the course of curing from the polyamic acid into the polyimide and has self-supporting properties. Its residual volatile content, which is calculated in accordance with the following formula 1, ranges from 5 to 500%, preferably from 5 to 100% and more preferably from 5 to 50%. It is appropriate to use a film having the residual volatile content falling within the range as defined above. When the residual volatile content is outside of this range, the desired effects are difficult to achieve. Formula 1:

$$(A-B)\times 100/B$$

wherein A represents the weight of the gel film; and B represents the weight of the gel film after heating to 450° C. for 20 minutes.

The imidization rate, which is calculated in accordance with the following formula 2 with the use of infrared absorption spectrometry, of the film is 50% or more, preferably 80% or more, yet more preferably 85% or more, and 90% or more in the most desirable case. It is appropriate to use a film having the imidization rate falling within the range as defined above. When the imidization rate is outside of this range, the desired effects are difficult to achieve. Formula 2:

$$(C/D)\times 100/(E/F)$$

wherein C represents the absorption peak height of the gel film at 1370 cm -1; D represents the absorption peak height of the gel film at 1500 cm -1; E represents the absorption peak height of the polyimide film at 1370 cm -1; and F represents the absorption peak height of the gel film at 1500 cm -1.]

In the graphitization process of the polymer film in the present invention, the polymer film, which is a starting material, is subjected to preheat treatment under reduced pressure or in nitrogen gas to perform carbonization. The preheating is usually carried out at about 500° C. The maximum temperature in this process is about 800° C to 1500° C. Preferably, the film is retained for about 30 minutes to about an hour in a temperature range form about 500° C to 1500° C. and the temperature is raised at a rate of 10° C./min.

Subsequently, the carbonized film is set in a very high temperature oven to perform graphitization. The graphitization is performed in an inert gas. As the inert gas, argon or helium is suitable, and addition of a small amount of helium to argon is more preferable. The heat treatment temperature required is preferably at least 2,000° C. at the minimum, and heat treatment is finally performed preferably at a temperature of 2,400° C. or higher, and more preferably 2,600° C. or higher.

As the heat treatment temperature is increased, transformation into a quality graphite is more easily enabled. However, in view of economics, preferably, transformation into a quality graphite is enabled at temperatures as low as possible. In order to achieve a very high temperature of 2,500° C. or higher, usually, a current is directly applied to a graphite heater and heating is performed using the resulting Joule heat. Deterioration of the graphite heater advances at 2,700° C. or higher. At 2,800° C., the deterioration rate increases about tenfold, and at 2,900° C., the deterioration rate increases further about tenfold. Consequently, it brings about a large economical advantage to decrease the temperature at which transformation into a quality graphite is enabled, for example, from 2,800° C. to 2,700° C., by improving the polymer film as the starting material.

The properties of the graphite sheet used in the present method have specific features.

The graphite sheets exhibit good fire barrier effects in burn-through tests. Fire barrier evaluation can be carried out by a method described in Aircraft Materials Fire Test Handbook by Federal Aviation Administration Fire Safety (FAA), Chapter 24 - Test Method To Determine the Burn-through Resistance of Thermal/Acoustic Insulation Materials (Federal Register/Vol. 68, No. 147/Thursday, July 31, 2003/Rules and Regulations). The present inventors have found that a high fire barrier effect can be achieved by use of the flexible graphitized polymer sheet. The flexible graphitized polymer sheet makes it possible that flame does not penetrate even after 6 minutes in the above described test.

The graphite sheets also exhibit good fire barrier effects in picture frame test. Evaluation through a picture frame test is carried out as in the burn-through test except that each sheet is affixed on a 31.75 inch $\times$ 17.75 inch frame. Thermographic measurement can be conducted with a thermograph, TH71-707 produced by NEC/San-Ei Instruments, Ltd. In an embodiment of the present invention, the graphitized polymer sheet exhibits a heat flux of 3.4 W/cm$^2$ (3.0 BTU/ft2·s) or less 6 minutes after start of the test and a temperature of 300°C (527 F) or less 6 minutes after start of the test in a picture frame test.

The graphitized polymer sheet also exhibits a heat flux of 8.0 W/cm$^2$ or less at the back side of the graphite sheet 6 minutes after start of the test in a picture frame test.

Furthermore, in an embodiment of the present invention, the graphitized polymer sheet exhibits a temperature of 800°C or less at the back side of the graphite sheet 6 minutes after start of the test in a picture frame test.

The graphitized polymer sheet preferably has a thermal conductivity in the plane direction of 300 W/mK or more, preferably 1000 W/mK or more, a thermal conductivity in the thickness direction of 1 to 20 W/mK; and the ratio of the thermal conductivity in the plane direction to the thermal conductivity in the thickness direction of 20 or more.

Thermal conductivity of graphitized polymer sheets have been evaluated before pressing and after pressing. "Before pressing" refers to a graphite sheet in a state after the polyimide is carbonized and graphitized but before pressing. In this state, air is borne between graphite layers and the heat insulation effect is high. The present inventors have studied the temperatures of the surfaces of the graphite sheet and conventional fire barrier product and found that the graphite sheets have a higher frame barrier effect than conventional commercially available product such as Nextel. Furthermore, heat is diffused faster in the graphitized polymer sheets among the graphite. Due to this reason, the temperature at the back side of the graphitized polymer sheets from the flame is lowest among the graphite.

Formation of heat spots can be prevented more easily with graphite sheets than with other fire barrier product among the graphite, graphitized polymer sheets more easily prevent heat spots than natural graphite sheets and decrease the probability of burning a combustible located at the opposite side of the sheet. Consequently, the heat flux of the graphite sheets is lower, and, among the graphite sheets, the graphitized polymer sheets (polyimide graphite sheets) have a lower heat flux.

The present inventors have also confirmed that the graphite sheets have an electromagnetic shielding property in addition to the fire barrier property. According to the results of measurement of electromagnetic shielding effects, the graphite sheets have an electromagnetic shielding effect comparable to that of copper foils. The same effect was also confirmed with the graphitized polymer sheets. This property is useful for a protective material for use in airplanes. Although fuselages of airplanes are typically composed of aluminum and the like material, there exist some airplanes with fuselages composed of organic materials (carbon fiber reinforced plastic or CFRP). In the cases where aluminum is used, a problem does not arise because aluminum has an effect of shielding electromagnetic waves from outside. In the cases where an organic material is used, it is a current practice to embed metal meshes and the like therein to shield electromagnetic waves. Since the graphite sheets also have electromagnetic shielding effect, both the fire barrier effect and the electromagnetic shielding effect can be expected when the graphite sheets are used as a fire barrier material. Thus, the trouble of using metal meshes in the fuselages or the like can be saved.

The electromagnetic shielding effect can be measured in accordance with a KEC method (1 to 18 GHz).

As described above, the graphite sheets have fire barrier effects superior to that of a commercially available product. Larger amounts of lower-molecular-weight compounds are contained in natural graphite. This has been found by comparison between natural graphite sheets and the graphitized polymer sheets among graphite sheets by 3D-MASS. Since the graphitized polymer sheets are substantially free of low-molecular-weight compounds, the graphitized polymer sheets emit less gas during heating or burning, are *less hazardous to human bodies, and can thus be safely used as a fire barrier material for airplanes. Therefore, the gas permeability of the graphite sheet can be 100.0 $\times$ 10$^6$ cc/m2·day or less.

The water absorption of the graphite sheet is preferably 1% or less.

The fire barrier system of the present invention may be provided in a number of configurations. In an embodiment of the present invention, the system comprises a laminate construction to provide a reinforced graphite layer, or optionally for enclosing an insulation bag, the laminate comprising as one of the layers a flexible graphitized polymer sheet. The reinforcing layer of the laminate may, for example, consist of plastic layers. Examples of reinforcing layers include metallized polyester or nylon films and high temperature stable polymeric materials that are optionally metallized, such as polyamides, polyvinyl fluorides, silicone resins, polyimides, polytetrafluoroethylenes (PTFEs), polyesters, polyaryl sulfones, polyetheretherketones, polyester amides, polyester imides, polyethersulfones, polyphenylene sulfides and combinations thereof.

The plastic layer may be a commercially available heat-resistant plastic film. A fiber reinforced plastic layer can be used as a plastic layer. Epoxy resin and phenol resin as the plastic, fiberglass and Kevlar as the fiber can be used in such a layer. Carbon fiber reinforced plastic layers also can be used as a plastic layer. Epoxy resin as the plastic, carbon fiber as the fiber can be used in such a layer.

The laminate may comprise insulative paper such as NOMEX paper.

The laminate may also comprise an inorganic fiber layer. The inorganic fiber layer means an array of fibers that may be randomly or regularly distributed, or may be in the form of a woven or a non-woven textile or a scrim of inorganic fiber such as fiberglass, ceramic fibers, metal fibers and mineral fibers. Alumina fibers, zirconia boron fibers, titanium oxide fibers, silicon carbide fibers can be used as Ceramic fibers. Rock wool and a basalt fiber can be used as the mineral fiber.

The laminate may also comprise an organic fiber layer. The organic fiber layer means a woven or a non-woven or a scrim of the organic heat-resistant fibers such as Nomex, Kevlar.

The scrim is included to provide tear resistant properties and puncture resistance to the laminate sheet material. The average thickness of the scrim can vary. The layer of scrim is preferably light weight, strong, and at least relatively nonflammable. Preferably, the scrim generates little or no smoke, or combustible or toxic decomposition products when exposed to flame.

Suitable non-metallic fibers include, but are not limited to, nylon, polyester, fiberglass, glass fibers, aramid fibers, crystalline ceramic oxide (including quartz) fibers, silicon nitride fibers, silicon carbide fibers, oxidized polyacrylonitrile fibers, carbon fibers, and combinations thereof. The fibers are typically provided as individual fibers or as bundled fibers, varying in length from a few centimeters to several meters. Preferably, the non-metallic fibers are glass fibers, crystalline ceramic oxide fibers, or combinations thereof. It is understood that crystalline ceramic oxide fibers may contain minor amounts of glassy phases at the grain boundaries. More preferably, the second substrate comprises primarily ceramic oxide fibers.

The laminate may also comprise a layer of metal sheet such as aluminum sheet and SUS including thin metal foil.

The fire barrier system may optionally be provided as an insulation blanket comprising as one layer of the insulation blanket a flexible graphitized polymer sheet. The blanket may comprise one or more polymer film layers, one or more woven or non-woven scrim layers and one or more foam layers. Examples of foam materials include polyurethane foam, polyisocyanurate foam, and silicon foam. A specific type of fire barrier system presently contemplated is a laminar construction comprising a layer of sound insulative foam and a fire barrier layer that is a flexible graphitized polymer sheet.

The graphitized polymer sheet can be provided in self-adhesive construction for application to substrates, e.g. walls or to insulation construction. In this embodiment, the graphitized polymer sheet may be provided as sheet with pressure sensitive adhesive ("PSA") coated thereon, optionally with a release liner covering the PSA. When application to the intended substrate is desired, the user removes the release liner from the PSA, thereby exposing the adhesive and making the self-adhesive graphitized polymer sheet ready for application to the substrate.

Preferably the adhesives used throughout all constructions are flame-retardant adhesives. The term flame-retardant adhesive material as used herein typically refers to an adhesive material that contains a flame-retardant additive (s) in a sufficient amount such that the adhesive material will not support combustion. Representative examples of such additives include, but are not limited to, antimony compounds, hydrated alumina compounds, ammines, borates, carbonates, bicarbonates, inorganic halides, phosphates, sulfates, organic halogens and organic phosphates. A continuous or discontinuous layer of flame-retardant adhesive material may be used to bond layers within the laminate sheet material, such as the first layer to the second layer. Preferably, a continuous layer of adhesive material is used for uniformity reasons.

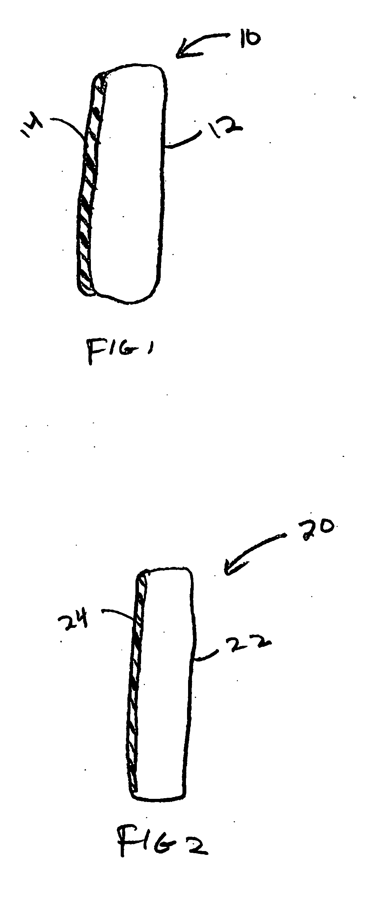

Turning to the drawing, FIG. 1 is a cross sectional view of an insulation bag 10 comprises an insulation material such as fiberglass (not shown) encased within a fluid barrier cover 12. A purpose of fluid barrier cover 12 is to protect the fiberglass insulation from condensation and other fluids it may come into contact with. Examples of materials suitable for use as a fluid barrier cover 12 include metallized polyester or nylon films and high temperature stable polymeric materials that are optionally metallized, such as polyamides, polyvinyl fluorides, silicone resins, polyimides, polytetrafluoroethylenes (PTFEs), polyesters, polyaryl sulfones, polyetheretherketones, polyester amides, polyester imides, polyethersulfones, polyphenylene sulfides and combinations thereof.

Graphitized polymer sheet 14 according to the present invention is positioned on the side of insulation bag 10 on an outside surface of fluid barrier cover 12. Graphitized polymer sheet 14 is advantageously located as shown such that in the event of a fire from a source outside insulation bag 10, graphitized polymer sheet 14 preferably prevents spread of fire to flammable metallized polyester cover 12 of insulation bag 10 from which it could potentially spread throughout the rest of a structure in which insulation bag 10 is positioned. Graphitized polymer sheet 14 may optionally be affixed to a surface of insulation bag 10. In an embodiment of the invention, graphitized polymer sheet 14 is affixed to a surface by a temperature resistant adhesive (not shown).

FIG 2 is a cross sectional view of an insulation bag 20 comprises an insulation material such as fiberglass (not shown) encased within a fluid barrier cover 22. A purpose of fluid barrier cover 22 is to protect the fiberglass insulation from condensation and other fluids it may come into contact with. Graphitized polymer sheet 24 according to the present invention is positioned on the side of insulation bag 20 on an inside surface of fluid barrier cover 22.

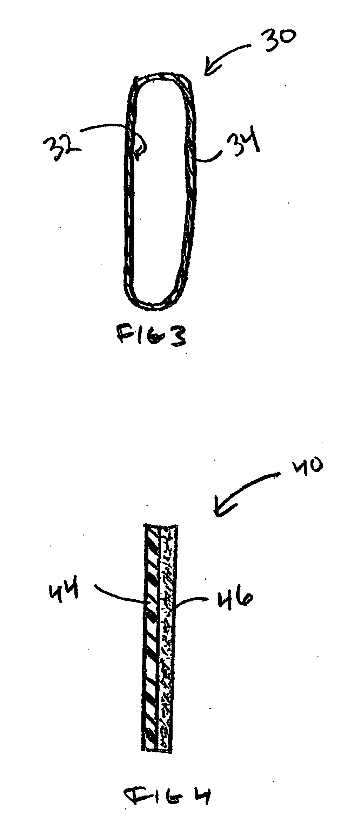

FIG 3 is a cross sectional view of an insulation bag 30 comprises an insulation material such as fiberglass (not shown) encased within a fluid barrier cover 32. A purpose of fluid barrier cover 32 is to protect the fiberglass insulation from condensation and other fluids it may come into contact with. Graphitized polymer sheet 34 according to the present invention is positioned on the entire outside surface of fluid barrier cover 32 of insulation bag 30 to provide complete fire barrier protection of the contents of insulation bag 30.

FIG 4 is a cross sectional view of a self-adhering construction 40, comprising graphitized polymer sheet 44 having a layer of pressure-sensitive adhesive ("PSA") 46 applied thereto. Optionally, a release liner is provided that covers the side of the PSA 46 (not shown). When application to the intended substrate is desired, the user removes the release liner from the PSA 46, thereby exposing the adhesive and making the self-adhesive graphitized polymer sheet ready for application to the substrate.

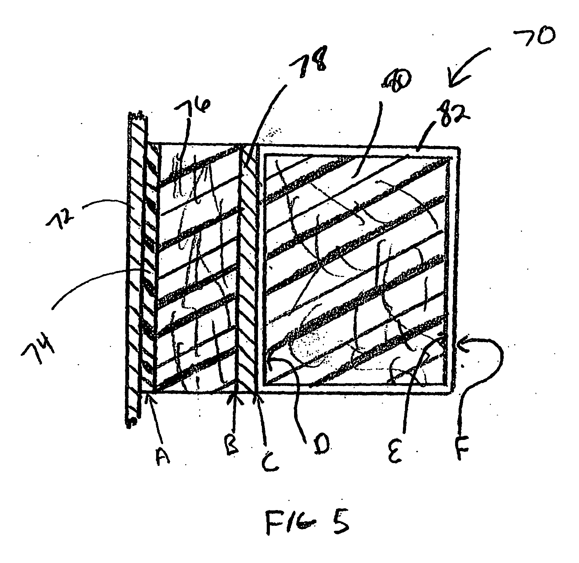

FIG 5 is a cross sectional side view of structure 70 having an insulative construction and fire barrier affixed thereto. Wall 72 has graphitized polymer sheet 74 positioned adjacent thereto. In an embodiment of the present invention, graphitized polymer sheet 74 is adhered to wall 72 by an adhesive that preferably is a temperature resistant adhesive (not shown). Foam layer 76 is provided as a noise and/or temperature insulation material. Examples of materials useful for making foam layer 76 include polymer foams such as polyurethane, polyimide (such as SOLIMIDE® polyimide insulation foams from Evonik Foams, Inc., Allen, Texas), polyester, polyether, melamine, polyisocyanurate, and silicon foams. The foams may be open cell or closed cell foams, and preferably has a density of from about 0.3 pcf (4.8 Kg/m$^3$) to about 0.6 pcf (9.6 Kg/m$^3$). In an embodiment of the present invention, foam layer 76 may be provided at a thickness of from about 0.125 inches to about 4 inches.

Optional aluminum foil layer 78 is positioned adjacent to foam layer 76, and provides enhanced flammability protection. Optionally, the aluminum foil layer 78 has a thickness of about 5-20 mils, and preferably about 10 mils.

Optional additional foam layer 80 is positioned adjacent to aluminum foil layer 78, and provides additional sound and temperature insulation properties. Examples of materials useful for making additional foam layer 80 are the same as above. Foam layer 80 may be the same or different from foam layer 76.

In an embodiment of the present invention, foam layer 76 and/or additional foam layer 80 may be enclosed within a water resistant cover film 82 that provides protection against water absorption by additional foam layer 80.

Examples of water resistant cover film 82 include metallized polyester covers.

As shown, graphitized polymer sheet 74 is positioned at location A, between outer fuselage skin 72 and foam layer 76. Alternative locations for graphitized polymer sheet 74 between one or more of the components of the portion of structure 70 are specifically contemplated. Thus, graphitized polymer sheet 74 may optionally be positioned at Location B (between foam layer 76 and aluminum foil layer 78), at Location C (between aluminum foil layer 78 and water resistant cover film 82), at Location D (between water resistant cover film 82 and additional foam layer 80 at the outboard side of this construction), at Location E (between additional foam layer 80 and water resistant cover film 82 at the inboard side of this construction), and/or at Location F (at the inboard side of water resistant cover film 82). In an embodiment of the present invention, it is contemplated that the entire additional foam layer 80 may be encapsulated by graphitized polymer sheet 74, either inside or outside of water resistant cover film 82.

A fire barrier wall is important for some structures. The fire hazard of material is often defined by their fire reaction and fire resistant properties. Fire reaction property is used to describe the flammability and combustion properties of material that affect the early stages of fire, generally from ignition to flashover. Fire reaction is also used to describe the smoke toxicity of a combustible material. Important fire reaction properties that affect fire growth are the heat release rate, time to ignition, flame spread time and oxygen index. Two other important fire reaction properties are smoke density and gas toxicity.

While many fire reaction properties are important in the development of fire up to the point of flashover, the fire resistant properties are critical when the fire has fully developed. Fire resistance defines the ability of a material or structure to impede the spread of fire and retain mechanical integrity. In other words, fire resistance relates to the ability of a construction to prevent a fire from spreading from one room to neighboring rooms. The main fire resistant properties are heat insulation, burn-through resistance, and structural integrity.

The conventional fire barrier protection such as a metal sheet has an advantage of fire reaction property, while it exhibits insufficient fire resistant property.

On the other hand, another conventional fire barrier protection such as FRP (fiber reinforced plastic) has an advantage of fire resistant property, while it exhibits insufficient fire reaction property.

The graphite sheet is useful for the fire barrier protection due to its superior properties as listed below.

    1. Thinner

2. Flexible
3. Lighter weight
4. Excellent burn-through resistance
5. No water absorption
6. No outgas
7. Non corrosion

The present invention of providing fire barrier protection is particularly useful for structures wherein space and/or weight are at a premium. Thus, structures such as automotive structures, trains, ships and other transportation vehicle structures substantially benefit from the protection afforded by use of presently specified light weight and minimal thickness materials. The present fire barrier system thus is highly useful where separation of motor devices from passenger or cargo areas is desired. Similarly, materials comprising electronics benefit from use of the present fire barrier system. Modem design approaches for consumer appliances, such as microwave ovens, heaters, washers, dryers, refrigerators and the like demand the use of smaller and smaller footprint, and lightweight materials for ease of shipping and placement. Such products also benefit from use of the present fire barrier system. Similarly, medical equipment materials, such as medical scanners and imagers and the like, benefit from use of the present fire barrier system.

The graphite sheet exhibits excellent fire reaction and fire resistant properties. In the conventional fire barrier protection system, CFRP, FRP and foam layers have been considered to have difficulty in use for ships, offshore and drilling platform due to its insufficient fire reaction property. The present invention enables the use of CFRP, FRP and foam layers for such the applications in combination with the graphite sheet. The laminate comprising the graphite sheet and CFRP, FRP and foam layers allows the laminate to exhibit excellent fire barrier property and trim its weight.

The use of a flexible graphitized polymer sheet and the various embodiments described herein individually to achieve fire barrier protection is additionally specifically contemplated.

## EXAMPLES

Example 1.

Test specimens were evaluated to determine the degree of fire barrier properties afforded in the form of sheets. Graphitized polyimide sheet (1mil and 1.5 mil) and a sheet of NEXTEL 312 Flame Stopping Dot Paper from 3M Company were evaluated to determine their response to flame challenge. Graphitized polyimide sheet was prepared from a polyimide film obtained from 4,4'-diaminodiphenyl ether and pyromellitic acid dianhydride.

The specimens first were conditioned by holding the test specimens at 70 +/-5 degree F and 55% +/-10% relative humidity, for a minimum of 24 hours prior to testing. During the actual test, the test room is kept at 70 +/- 5 degree F and 55% +/-10% relative humidity.

A flame assault was carried out under the following conditions:

A Bernz-O-matic TS-2000 torch was ignited, and the flame was set to a height of 2.5 inches, and allowed to reach a steady state.

A specimen of size 1.5 inch x 2.5 inch was inserted into the flame, with its lower surface being 0.4 inches above the level of the top of the torch. The sample was held in this position for 6 minutes, with the observations as recorded in Table 1.

Table 1

|  | Graphitized polymer sheet (1mil and 1.5 mil) | Ceramic paper |
|---|---|---|
| < 10 sec | No change | Ceramic paper became charred and have offensive odor |
| < 30sec. | No change | Charred is gone Flame started to penetrate the paper |
| 6 min | No change | Flame continued to penetrate the paper |
| After testing | Graphitized polymer sheet keeps flexibility | Ceramic paper does not flexibility |

As a result of the lab test, it was observed that the graphitized polymer sheet does not burn at all. It as also noted that flame does not penetrate the graphitized polymer sheet (neither 1mil nor 1.5 mil graphitized polymer sheet).

In contrast, the ceramic paper became charred in a short time. This phenomenon seems to be due to burning of the binder resin of ceramic paper. Ceramic fiber itself does not burn. However, after the binder resin was apparently burned away, the flame was observed to penetrate the ceramic paper. After the completion of the burn test, the ceramic paper was observed to be brittle, while the graphitized polymer sheet remained flexible.

Example 2.

An identical test was carried out comparing a graphitized polyimide sheet having a thickness of 40 $\mu$m) with a sheet of natural graphite (240 $\mu$m). The observations for both graphite sheets were the same as above, except that after conclusion of the test it was noted that the natural graphite film formed a blister about 2 - 5 mm in a diameter on the surface of the sheet. However, flame was not observed to penetrate the natural graphite sheet. Graphitized polyimide sheet was prepared from a polyimide film obtained from 4,4'- diaminodiphenyl ether and pyromellitic acid dianhydride.

Example 3.

Samples used in evaluation are shown in Table 2. A polyimide prepared by polymerization of pyromellitic acid dianhydride with 4,4'-diaminodiphenyl ether was used as PI graphite. Five types of graphite sheets that have different thicknesses and include natural graphite sheets, and a commercial product, Nextel 312 Flame Stopping Dot Paper from 3M Company were used.

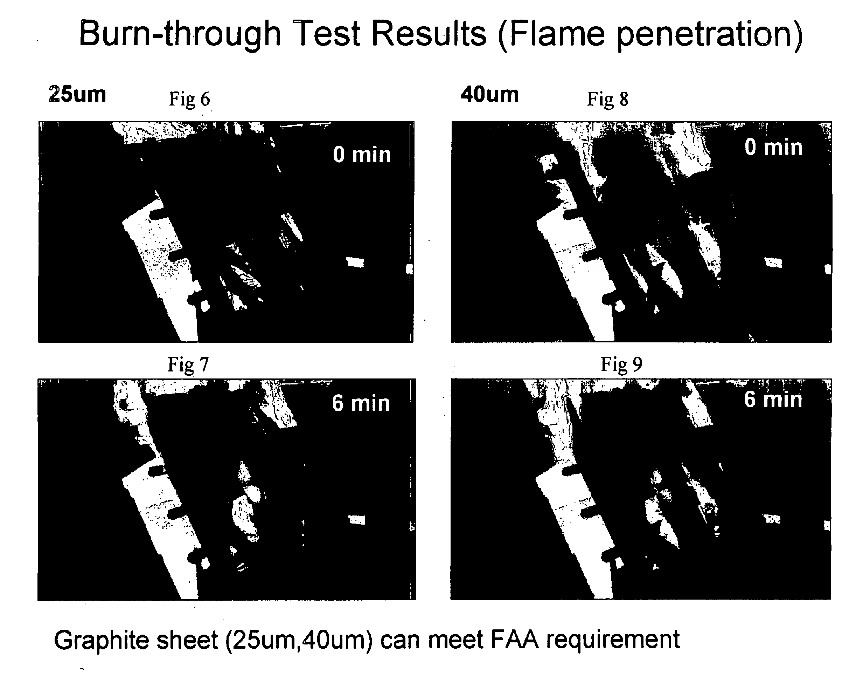

Burn-through test was carried out by a method described in Aircraft Materials Fire Test Handbook by Federal Aviation Administration Fire Safety (FAA), Chapter 24 - Test Method To Determine the Burnthrough Resistance of Thermal/Acoustic Insulation Materials (Federal Register/Vol. 68, No. 147/Thursday, July 31, 2003/Rules and Regulations). See Figs. 6 to 9. Figs. 6 and 7 show a 25 $\mu$m graphitized polyimide sheet at 0 min and 6 min, respectively. Figs. 8 and 9 show a 40 $\mu$m graphitized polyimide sheet at 0 min and 6 min, respectively.

These photographs show that a high fire barrier effect is achieved since flame does not penetrate even after 6 minutes.

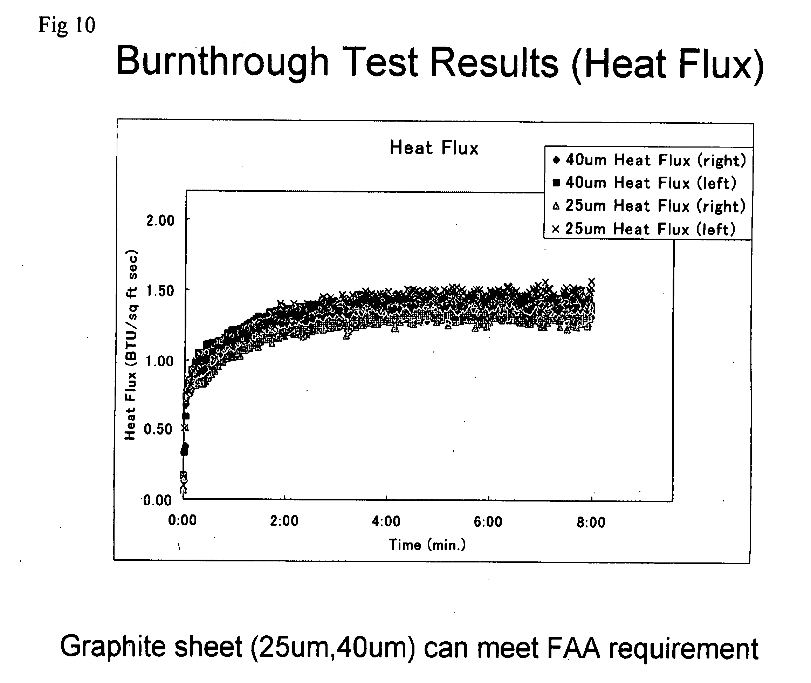

Heat flux is as shown in Fig. 10. The heat flux remained below 2.0 (BTU/sq ft sec), which is the FAA standard, even after 8 minutes.

Evaluation through picture frame test was carried out as in the burnthrough test except that each sheet is affixed on a 31.75 inch $\times$ 17.75 inch frame.

Thermographic measurement was conducted with a thermograph, TH71-707 produced by NEC/San-Ei Instruments, Ltd.

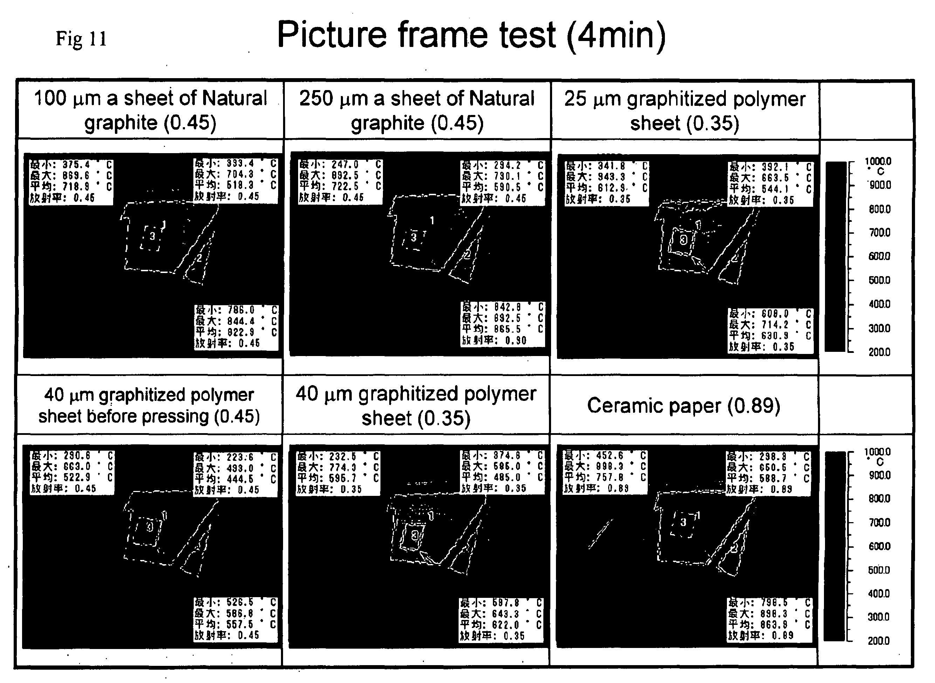

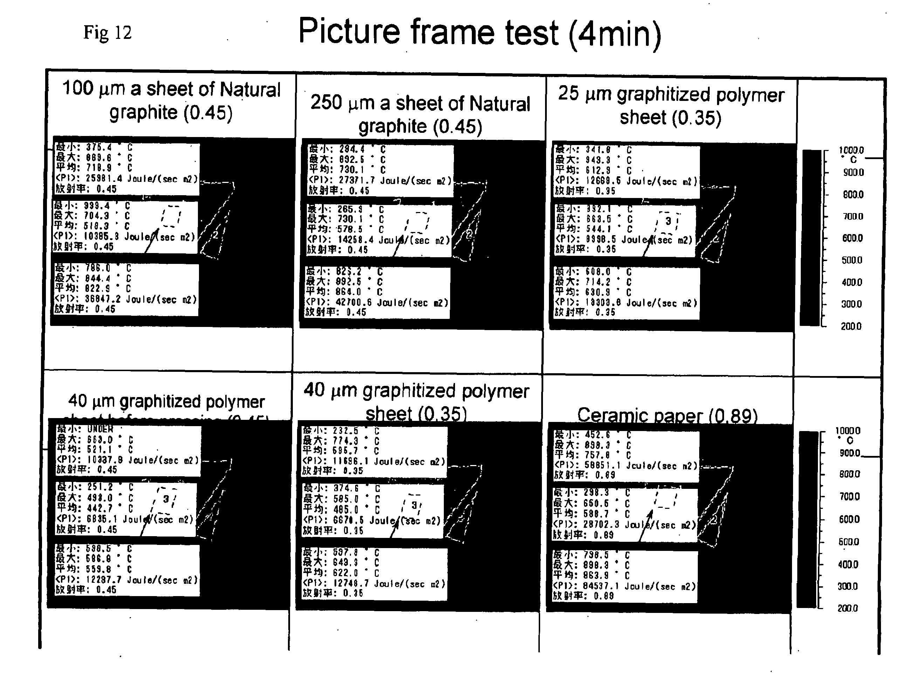

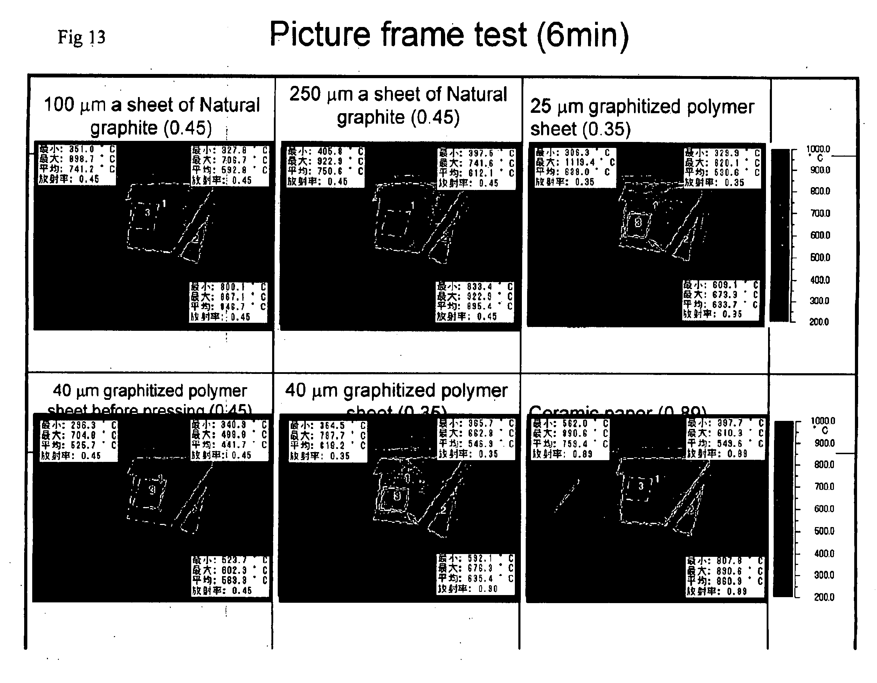

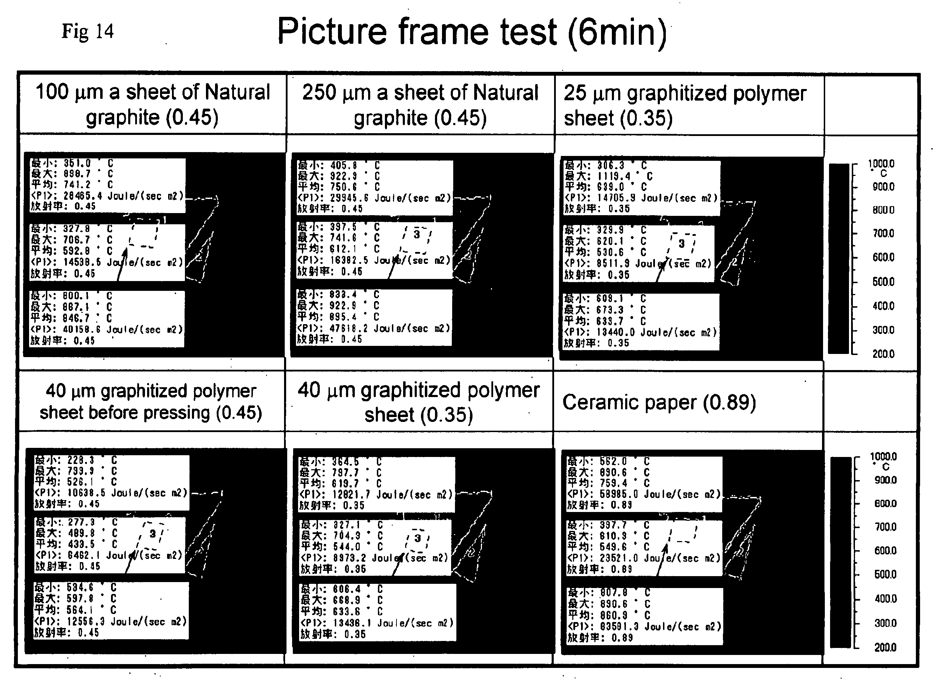

"Before pressing" refers to a graphite sheet in a state after the polyimide is carbonized and graphitized but before pressing. In this state, air is borne between graphite layers and the heat insulation effect is high. The temperatures of the sheet surfaces are shown in Figs. 11 to 14.

The figures show that the graphite sheets have a higher frame barrier effect than Nextel. They also show that heat is diffused faster in the graphitized polyimide sheet among the graphite. Due to this reason, the temperature at the back side of the graphitized polyimide sheet from the flame was lowest.

Formation of heat spots can be prevented more easily with graphite sheets than with Nextel. Among the graphite, he graphitized polyimide sheets more easily prevent heat spots than natural graphite sheets and decrease the probability of burning a combustible located at the opposite side of the sheet. Consequently, the heat flux of the graphite sheets is lower, and, among the graphite sheets, the PI graphite sheets have a lower heat flux.

The results of the burnthrough test and the picture frame test are summarized in Table 4.

It was confirmed that the graphite sheets had an electromagnetic shielding property in addition to the fire barrier property.

The electromagnetic shielding effect was measured in accordance with a KEC method (1 to 18 GHz). SIGNAL GENERATOR MG3601 produced by ANRITSU was used to send electromagnetic waves, PRE AMPLIFIER 8449B (1 to 26.5 GHz) produced by HEWEKETT PACKARD was used as an amplifier (amplification of electromagnetic waves) and SPECTRUM ANALYZER 8564E (30 Hz to 40 GHz) produced by HEWEKETT PACKARD was used to receive the electromagnetic waves.

As described above, the graphite sheets have fire barrier effects superior to that of a commercially product. A comparison between natural graphite sheets and PI graphite sheets among graphite sheets by 3D-MASS shows that larger amounts of lower-molecular-weight compounds are contained in natural graphite. The comparison between the natural graphite sheets and the graphitized polyimide sheets also revealed differences indicated in Table 3. The properties described in the tables were determined as described below. Emissivity was measured with an emissivity meter, TSS-5X produced by Japan Sensor Corporation.

[Thermal conductivity]

The thermal conductivity of a graphite film can be calculated by the following formula (1):

$$\lambda = \alpha \times d \times Cp \qquad (1)$$

In formula (1), $\lambda$ represents thermal conductivity, $\alpha$ represents thermal diffusivity, d represents density, and Cp represents specific heat capacity. The thermal diffusivity, density, and specific heat capacity of the graphite film can be determined by the processes described below.

(Measurement of thermal diffusivity of a graphite film in a plane direction by optical alternating current method)

An optical AC method thermal diffusivity meter (LaserPit available from ULVAC Inc.) was used to determine the thermal diffusivity. A 4 × 40 mm sample was cut out from a graphite film and analyzed in an atmosphere of 20°C at 10 Hz.

(Measurement of thermal diffusivity of graphite film in thickness direction)

In measuring the thermal diffusivity and thermal conductivity of a graphite film in the thickness direction by a laser flash technique, LFA-502 produced by Kyoto Electronics Manufacturing Co., Ltd., in compliance with Japanese Industrial Standard (JIS) R1611-1997 was used. A graphite film was cut to a diameter of 10 mm, a black body spray produced by Tasco Japan Co. Ltd., was sprayed toward both sides of the film, and the thermal diffusivity in the thickness direction was measured by a laser flash technique at room temperature.

[Measurement of graphite film density]

The density of a graphite film was calculated by dividing the weight (g) of a graphite film by a volume ($cm^3$) obtained by multiplying the length, width, and thickness of the graphite film. The thickness of the graphite film was determined by measuring the thickness of a 50 mm × 50 mm film with a thickness gauge (HEIDENHAIN-CERTO produced by Heidenhain) in a thermostatic chamber at 25°C at any ten points and taking the average of the thicknesses. A higher density means a more extensive graphitization.

(Measuring specific heat capacity of a graphite film)

The specific heat capacity of a graphite film was measured with differential scanning calorimeter DSC220CU, a thermal analysis system produced by SII NanoTechnology Inc., by elevating the temperature from 20°C to 260°C at a rate of 10 °C/min under nitrogen stream (30 ml/min).
The thermal conductivity in the plane direction was calculated from the thermal diffusivity, density, and specific heat capacity of the graphite film in the plane direction, and the thermal conductivity in the thickness direction was calculated from the thermal diffusivity, density, and specific heat capacity of the graphite film in the thickness direction. The larger the values of thermal conductivity and diffusivity, the higher the heat conducting property.

[Electrical conductivity]

The electrical conductivity was measured by a four-terminal technique. In particular, after a filmy graphite about 3 mm × 6 mm in size was prepared and observed with an optical microscope to confirm absence of rupture or wrinkle in the sample, external electrodes were formed at two ends with silver paste and internal electrodes were formed between the external electrodes with a silver paste. A constant current generator ("programmable current source 220" produced by Keithley Instruments Inc.) was used to apply a 1 mA constant current from between the external electrodes, and the voltage between the internal electrodes was measured with a voltmeter (Nano Voltometer 181 produced by Keithley Instruments Inc). The electrical conductivity was calculated by assigning values to a formula, (applied current/measurement voltage) × (distance between internal electrodes/sample cross-sectional area).

[Water absorption]

The water absorption of the film was measured as below. A film was dried at 100°C for 30 minutes to be absolutely dried, and a 10 cm-square sample 25 $\mu$m in thickness was prepared. The weight of the sample was measured and assumed to be A1. The 10 cm-square sample 25 $\mu$m in thickness was immersed in distilled water at 23°C for 24 hours, the surfaces were wiped to remove water, and the weight was immediately measured. This weight was assumed to be A2. The water absorption was determined from the following formula:

$$\text{Water absorption (\%)} = (A2 - A1) \div A1 \times 100$$

[Tensile strength]

The tensile strength and tensile modulus of graphite films in forms of single units and composites were measured with Strograph VES1D produced by Toyo Seiki Seisaku-sho, Ltd., in accordance with ASTM-D-882. The measurement was conducted at a chuck-chuck distance of 100 mm and a tensile rate of 50 mm/min at room temperature three times and the average was used.

[MIT folding endurance]

MIT folding endurance test was conducted on a graphite film. A graphite film cut to 1.5 $\times$ to 10 cm was subjected to test using MIT Folding Endurance Tester Type D produced by Toyo Seiki Co., at a test load of 100 gf (0.98 N), a rate of 90 times/min, and a bending radius R of 1 mm. The bending angle was 90° to the left and right.

[Oxygen and hydrogen permeability]

The oxygen permeability of a graphite film was measured with GTR-20XAFK produced by GTR Tec Corporation. G2700T produced by Yanako Technical Science Inc., was used to conduct gas chromatography. Measurement was conducted by an equal-pressure method (in compliance with JIS K-7126 and ISO 15105-1) at a test gas (oxygen) flow of 39.2 ml/min, 25°C, and 0% RH while using helium gas as the carrier gas. The measurement was conducted five times and the average of the results was used. The hydrogen permeability of a graphite film was measured with GTR-20XAFK produced by GTR Tec Corporation, and G2700T produced by Yanako Technical Science Inc., was used to conduct gas chromatography. Measurement was conducted by an equal-pressure method (in compliance with JIS K-7126 and ISO 15105-1) at a test gas (hydrogen) flow of 38.5 ml/min, 25°C, and 0% RH while using argon gas as the carrier gas. The measurement was conducted five times and the average of the results was used.

[TG analysis (differential thermal analysis)]

The differential thermal analysis of a graphite film was conducted with TG/DTA-6300 (thermo-gravimetric/ differential thermal analyzer) produced by Seiko Instruments Inc., while using $\alpha$ alumina as the reference, at a temperature elevation rate of 10.0 °C/min and a maximum temperature of 1000°C.

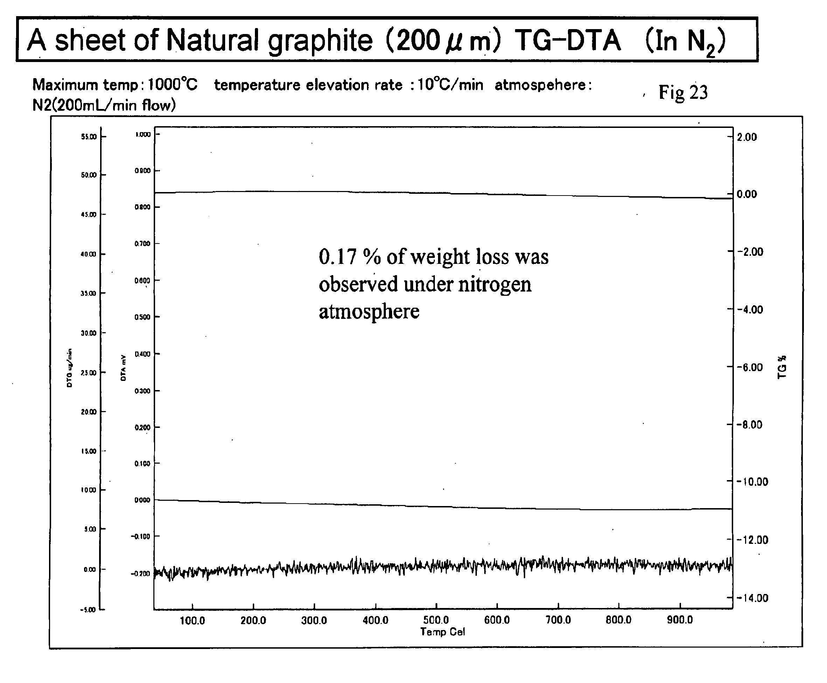

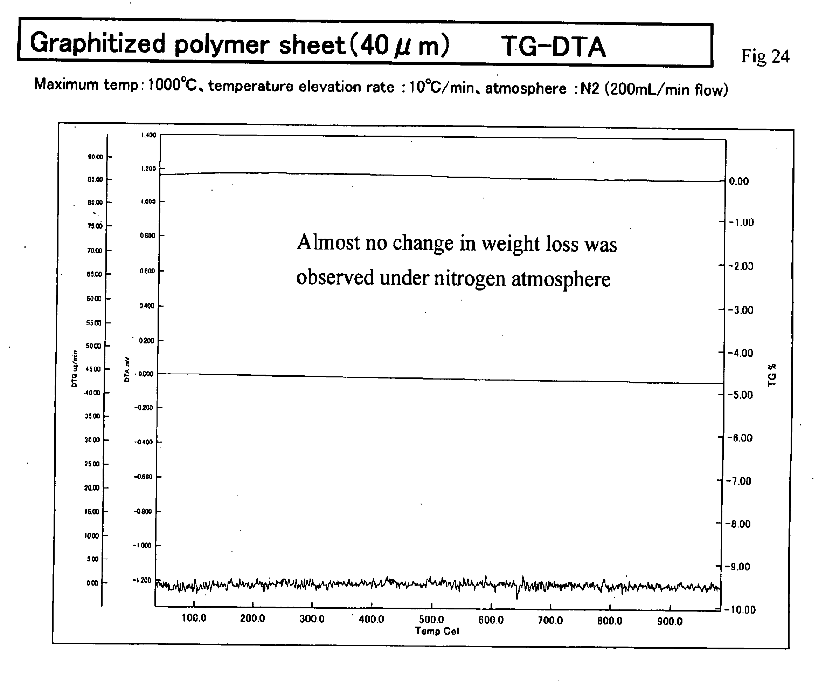

0.17% of weight loss was observed under nitrogen atmosphere in Fig 23. Almost no change in weight loss was observed under nitrogen atmosphere in Fig 24.

Table 2

| | | 100 $\mu$m A sheet of natural graphite | 250 $\mu$m A sheet of natural graphite | 25 $\mu$m Graphitized polyimide sheet | 40 $\mu$m Graphitized polyimide sheet | 65 $\mu$m Graphitized polyimide sheet | Ceramic paper (Nextel 312) |
|---|---|---|---|---|---|---|---|
| Bum through test | Photograph | - | - | ○ | ○ | - | - |
| | Heat flux | - | - | ○ | ○ | - | - |
| | Thermograph | - | - | ● | ● | - | - |
| Picture frame test | Heat flux | ○ | ○ | ○ | ○ | ○ | ○ |
| | Temperature | ○ | ○ | ○ | ○ | ○ | ○ |
| | Thermograph | ○ | ○ | ○ | ○ | ○ | ○ |
| TDS | | - | ○ | - | ○ | - | ● |

(continued)

|  | 100 μm A sheet of natural graphite | 250 μm A sheet of natural graphite | 25 μm Graphitized polyimide sheet | 40 μm Graphitized polyimide sheet | 65 μm Graphitized polyimide sheet | Ceramic paper (Nextel 312) |
|---|---|---|---|---|---|---|
| TG | - | ○ | - | ○ | - | ● |
| Electromagnetic shield | - | ○ | - | ○ | - | - |
| ○:Measurement results were obtained. | | | | | | |

Table 3

|  | | 100 μm A sheet of natural graphite | 250 μm A sheet of natural graphite | 25 μm Graphitized polyimide sheet | 40 μm Graphitized polyimide sheet | 65 μm Graphitized polyimide sheet | Ceramic paper (Nextel 312) |
|---|---|---|---|---|---|---|---|
|  | | Natural graphite | Natural graphite | PI graphite | PI graphite | PI graphite | Nextel |
| Thickness (μm) | | 100 | 250 | 25 | 40 | 65 | 280 |
| Weight (g/m$^2$) | | 120 | 250 | 50 | 75 | 75 | 72 |
| Density (g/cm$^3$) | | 1.2 | 1 | 1.95 | 1.95 | 1.15 | 0.26 |
| Thermal conductivity (W/Mk) | Plane direction | 250 | 200 | 1250 | 1250 | 740 | <10 |
|  | Thickness direction | 5 | 5 | 5 | 5 | 5 | <1 |
| Electrical conductivity (S/cm) | | 1000 | 950 | 11500 | 11500 | 6780 | <0 |
| Emissivity | | 0.45 | 0.45 | 0.35 | 0.35 | 0.45 | 0.89 |
| Oxygen permeability (cc/m2·day) | | $3.0 \times 10^6$ | $2.6 \times 10^6$ | $< 5 \times 10^1$ | $< 5 \times 10^1$ | $< 5 \times 10^1$ | $> 1 \times 10^7$ |
| Hydrogen permeability (cc/m2·day) | | $9.5 \times 10^6$ | $8.6 \times 10^6$ | $< 5 \times 10^1$ | $<5 \times 10^1$ | $< 5 \times 10^1$ | $> 1 \times 10^7$ |
| Water absorption (%) | | 50% | 49% | 0% | 0% | 0 | 68% |
| MIT (R2:135°) (times) | | 50 | <10 | > 10000 | > 10000 | 1000 | <10 |
| Tensile strength (MPa) | | 10 | 10 | > 40 | > 40 | > 20 | > 1000 |
|  | | | | | | | |

Table 4

| | | | | 100 μm A sheet of natural graphite | 250 μm A sheet of natural graphite | 25 μm Graphiti zed polyimid e sheet | 40 μm Graphiti zed polyimid e sheet | 65 μm Graphiti zed polyimid e sheet | Ceramicpaper (Nextel 312) |
|---|---|---|---|---|---|---|---|---|---|
| | | | | Natural graphite | Natural graphite | PI graphite | PI graphite | PI graphite | Nextel |
| Thickness (μm) | | | | 100 | 250 | 25 | 40 | 65 | 280 |
| | | | | | | | | | |
| Picture frame test | | | | | | | | | |
| After 4 min | Rear side | Heat Flux | (BTU/ft$^2$ ·s) / (W/cm2) | 2.19 /2.61 | 2.29 /2.60 | 1.86 /2.11 | 1.97 /2.24 | 1.93 /2.19 | 3.12 /3.55 |
| | | Temperature | (F) /(°C) | 446F /230°C | 511F /266°C | 416F /213°C | 416F /214°C | 432F /222°C | 580F /304°C |
| | Rear surface | Heat Flux(W/cm2) | | 3.68 | 4.27 | 1.33 | 1.27 | 1.23 | 8.45 |
| | | Temperature (°C) | | 823°C | 864°C | 631°C | 622°C | 560°C | 864°C |
| After 6 min | Rear side | Heat Flux | (BTU/ft$^2$ ·s) / (W/cm2) | 2.30 /2.61 | 2.32 /2.64 | 2.05 /2.33 | 2.04 /2.32 | 1.94 /2.20 | 3.19 /3.63 |
| | | Temperature | (F) /(°C) | 490F /254°C | 540F /282°C | 454F /234°C | 459F /237°C | 459F /237°C | 604F /318°C |
| | Rear surface | Heat Flux(W/cm2) | | 4.02 | 4.76 | 1.34 | 1.34 | 1.26 | 8.36 |
| | | Temperature | | 847°C | 895°C | 634°C | 634°C | 564°C | 861°C |
| | | | | | | | | | |
| Burn through test | | | | | | | | | |
| After 4 minutes | Heat Flux | (BTU/ft$^2$ ·s) /(W/cm2) | | - | - | 1.36 /1.55 | 1.29 /1.46 | - | - |
| After 6 minutes | Heat Flux | (BTU/ft$^2$ ·s) /(W/cm2) | | - | - | 1.35 /1.54 | 1.37 /1.56 | - | - |
| After 16 minutes | Heat Flux | (BTU/ft$^2$ ·s) /(W/cm2) | | - | - | 1.30 /1.48 | 1.24 /1.41 | - | - |

EP 2 257 344 B1

All patents, patent applications (including provisional applications), and publications cited herein are incorporated by reference as if individually incorporated for all purposes. Unless otherwise indicated, all parts and percentages are by weight and all molecular weights are weight average molecular weights. The foregoing detailed description has been given for clarity of understanding only. No unnecessary limitations are to be understood therefrom. The invention is not limited to the exact details shown and described, for variations obvious to one skilled in the art will be included within the invention defined by the claims.

**Claims**

1.  The use of a flexible graphitized polymer sheet to achieve fire barrier protection, the flexible graphitized polymer sheet having MIT of 1000 times or more,
    wherein the MIT represents MIT folding endurance as determined by a MIT folding endurance test which is conducted on a graphite film cut to 1.5 cm $\times$ 10 cm with use of a folding endurance tester under a condition where a test load is 100 gf (0.98 N), a rate is 90 times/min, a bending radius R is 1 mm, and a bending angle is 90° to left and right.

2.  The use of a flexible graphitized polymer sheet according to claim 1, wherein the graphitized polymer sheet has:

    a thermal conductivity in the plane direction of 300 W/mK or more,
    a thermal conductivity in the thickness direction of 1 to 20 W/mK; and
    the ratio of the thermal conductivity in the plane direction to the thermal conductivity in the thickness direction of 20 or more.

3.  The use of a flexible graphitized polymer sheet according to claim 1, wherein the graphitized polymer sheet exhibits in a picture frame test a heat flux of 3.4 W/cm$^2$ (3.0 BTU/ft$^2$ · s) or less 6 minutes after start of the test and a temperature of 300°C (527 F) or less 6 minutes after start of the test in a picture frame test; preferably wherein the graphitized polymer sheet exhibits a heat flux of 3.4 W/cm$^2$ (3.0 BTU/ft$^2$ · s) or less 6 minutes after start of the test in a picture frame test in a burn-through test.

4.  The use of a flexible graphitized polymer sheet according to claim 1, wherein the graphitized polymer sheet exhibits a heat flux of 8.0 W/cm$^2$ or less at the rear side of the graphite sheet 6 minutes after start of the test in a picture frame test; preferably wherein the graphitized polymer sheet exhibits a temperature of 800°C or less at the rear side of the graphite sheet 6 minutes after start of the test in a picture frame test.

5.  The use of a flexible graphitized polymer sheet according to claim 1, wherein graphitized polymer sheet has one of the properties wherein

    a) the water absorption of the graphitized polymer sheet is 1% or less;
    b) the gas permeability of the graphitized polymer sheet is 100.0 $\times$ 10$^6$ cc/m$^2$·day or less; or
    c) the graphitized polymer sheet has a weight of from 20 to 250 g/sqm.

6.  The use of a flexible graphitized polymer sheet according to claim 1, wherein the electrical conductivity of the graphite sheet is 10000 S/cm or more.

7.  The use of a flexible graphitized polymer sheet according to claim 1, wherein the graphitized polymer sheet is a graphitized polymer sheet prepared from a polymer selected from the group consisting of polyoxadiazoles, polybenzothiazole, polybenzobisthiazole, polybenzoxazole, polybenzobisoxazole, polyimides, polyamides, polyphenylenebenzoimidazole, polythiazole, polyparaphenylenevinylene, poly(p-phenyleneisophthalamide), poly(m-phenylenebenzoimidazole), and poly(phenylenebenzobisimidazole); preferably wherein the graphitized polymer sheet is a graphitized polymer sheet prepared from a polyimide polymer.

8.  The use of a flexible graphitized polymer sheet according to claim 1, wherein the graphitized polymer sheet is adhered to a substrate or system component with a flame-retardant adhesive material.

**Patentansprüche**

1.  Verwendung einer flexiblen graphitisierten Polymerlage zum Erreichen eines Feuersperrschutzes, wobei die flexible graphitisierte Polymerlage ein MIT von 1000-fach oder mehr aufweist,
wobei das MIT eine MIT Faltbeständigkeit darstellt, wie durch eine MIT Faltbeständigkeitsprüfung, welche auf einen auf 1,5 cm × 10 cm zugeschnittenen Graphitfilm unter Verwendung eines Faltbeständigkeitsprüfers unter einer Bedingung, wo eine Testlast 100 gf (0,98 N) beträgt, eine Geschwindigkeit 90 Mal/min beträgt, ein Biegeradius R gleich 1 mm beträgt und ein Biegewinkel 90° nach links und rechts beträgt, durchgeführt wird.

2. Verwendung einer flexiblen graphitisierten Polymerlage nach Anspruch 1, wobei die graphitisierte Polymerlage aufweist:

eine thermische Leitfähigkeit in der ebenen Richtung von 300 W/mK oder mehr,
eine thermische Leitfähigkeit in der Dickerichtung von 1 bis 20 W/mK; und
ein Verhältnis der thermischen Leitfähigkeit in der ebenen Richtung zu der thermischen Leitfähigkeit in der Dickerichtung von 20 oder mehr.

3. Verwendung einer flexiblen graphitisierten Plolymerlage nach Anspruch 1, wobei die graphitisierte Polymerlage in einer Bildrahmenprüfung einen Wärmefluss von 3,4 W/cm$^2$ (3,0 BTU/ft$^2$ x s) oder weniger 6 Minuten nach Beginn der Prüfung und eine Temperatur von 300°C (527 F) oder weniger 6 Minuten nach Beginn der Prüfung in einer Bildrahmenprüfung aufweist; wobei vorzugsweise die graphitisierte Polymerlage einen Wärmefluss von 3,4 W/cm$^2$ (3,0 BTU/ft$^2$ x s) oder weniger 6 Minuten nach Beginn der Prüfung in einer Bildrahmenprüfung bei einer Durchbrennprüfung aufweist.

4. Verwendung einer flexiblen graphitisierten Polymerlage nach Anspruch 1, wobei die graphitisierte Polymerlage einen Wärmefluss von 8,0 W/cm$^2$ oder weniger an der Rückseite der Graphitlage 6 Minuten nach Beginn der Prüfung in einer Bildrahmenprüfung aufweist; wobei vorzugsweise die graphitisierte Polymerlage eine Temperatur von 800°C oder weniger an der Rückseite der Graphitlage 6 Minuten nach Beginn der Prüfung in einer Bildrahmenprüfung aufweist.

5. Verwendung einer graphitisierte Polymerlage nach Anspruch 1, wobei die graphitisierte Polymerlage eine der folgenden Eigenschaften aufweist, wobei

a) die Wasserabsorption der graphitisierten Polymerlage 1% oder weniger beträgt;
b) die Gasdurchlässigkeit der graphitisierte Polymerlage 100,0 x 10$^6$ cc/m$^2$ x Tag oder weniger beträgt; oder
c) die graphitisierte Polymerlage ein Gewicht von 20 bis 250 g/sqm aufweist.

6. Verwendung einer flexiblen graphitisierten Polymerlage nach Anspruch 1, wobei die elektrische Leitfähigkeit der Graphitlage 10000 S/cm oder mehr beträgt.

7. Verwendung einer flexiblen graphitisierten Polymerlage nach Anspruch 1, wobei die graphitisierte Polymerlage eine graphitisierte Polymerlage ist, die angefertigt ist aus eine Polymer ausgewählt aus der Gruppe bestehend aus Polyoxadiazolen, Polybenzothiazol, Polybenzobisthiazol, Polybenzoxazol, Polybenzobisoxazol, Polyimiden, Polyamiden, Polyphenylenbenzoimidazol, Polythiazol, Polyparaphenylenvinylen, Poly(p-phenylenisophthalamid), Poly(m-phenylenbenzoimidazol) und Poly(phenylenbenzobisimidazol); wobei vorzugsweise die graphitisierte Polymerlage eine aus einem Polyimidpolymer angefertigte graphitisierte Polymerlage ist.

8. Verwendung einer flexiblen graphitisierten Polymerlage nach Anspruch 1, wobei die graphitisierte Polymerlage an ein Substrat oder eine Systemkomponente mit einem flammhemmenden Haftmaterial angeheftet ist.

## Revendications

1. Utilisation d'une feuille polymère graphitisée souple pour réaliser une protection coupe-feu, la feuille polymère graphitisée souple ayant une MIT de 1 000 fois ou plus,
dans laquelle la MIT représente la résistance au pliage selon MIT telle que déterminée par un essai de résistance au pliage MIT qui est conduit sur un film de graphite découpé à 1,5 cm x 10 cm avec l'utilisation d'un pliagraphe dans une condition où une charge d'essai est de 100 gf (0,98 N), une vitesse est de 90 fois/min, un rayon de cintrage R est de 1 mm et un angle de cintrage est de 90 ° vers la gauche et la droite.

2. Utilisation d'une feuille polymère graphitisée souple selon la revendication 1, dans laquelle la feuille polymère graphitisée souple a :

une conductivité thermique dans le sens du plan de 300 W/mK ou plus,
une conductivité thermique dans le sens de l'épaisseur de 1 à 20 W/mK ; et
le rapport entre la conductivité thermique dans le sens du plan et la conductivité thermique dans le sens de l'épaisseur de 20 ou plus.

3.  Utilisation d'une feuille polymère graphitisée souple selon la revendication 1, dans laquelle la feuille polymère graphitisée souple affiche dans un essai de cadre d'image un flux de chaleur de 3,4 W/cm$^2$ (3.0 BTU/pi$^2$ · s) ou moins 6 minutes après le démarrage de l'essai et une température de 300 °C (527 F) ou moins 6 minutes après le démarrage de l'essai dans un essai de cadre d'image ; de préférence dans laquelle la feuille polymère graphitisée affiche un flux de chaleur de 3,4 W/cm$^2$ (3,0 BTU/pi$^2$ · s) ou moins 6 minutes après le démarrage de l'essai dans un essai de cadre d'image dans un essai de traversée.

4.  Utilisation d'une feuille polymère graphitisée souple selon la revendication 1, dans laquelle la feuille polymère graphitisée affiche un flux de chaleur de 8,0 W/cm$^2$ ou moins sur le côté carrière de la feuille de graphite 6 minutes après le démarrage de l'essai dans un essai de cadre d'image ; de préférence dans laquelle la feuille polymère graphitisée affiche une température de 800 °C ou moins sur le côté arrière de la feuille de graphite 6 minutes après le démarrage de l'essai dans un essai de cadre d'image.

5.  Utilisation d'une feuille polymère graphitisée souple selon la revendication 1, dans laquelle la feuille polymère graphitisée a une des propriétés où

a) l'absorption d'eau de la feuille polymère graphitisée est de 1 % ou moins ;
b) la perméabilité aux gaz de la feuille polymère graphitisée est de 100,0 x 10$^6$ cc/m$^2$/jour ou moins ; ou
c) la feuille polymère graphitisée a un poids de 20 à 250 g/m$^2$.

6.  Utilisation d'une feuille polymère graphitisée souple selon la revendication 1, dans laquelle la conductivité électrique de la feuille de graphite est de 10 000 S/cm ou plus.

7.  Utilisation d'une feuille polymère graphitisée souple selon la revendication 1, dans laquelle la feuille polymère graphitisée est une feuille polymère graphitisée préparée à partir d'un polymère choisi dans le groupe consistant en les poly(oxadiazoles), le poly(benzothiazole), le poly(benzobisthiazole), le poly(benzoxazole), le poly(benzobisoxazole), les poly(imides), les poly(amides), le poly(phénylènebenzoimidazole), le poly(thiazole), le poly(paraphénylènevinylène), le poly(p-phénylèneisophtalamide), le poly(m-phénylènebenzoimidazole), et le poly(phénylènebenzobisimidazole) ; de préférence dans laquelle la feuille polymère graphitisée est une feuille polymère graphitisée préparée à partir d'un polymère de poly(imide).

8.  Utilisation d'une feuille polymère graphitisée souple selon la revendication 1, dans laquelle la feuille polymère graphitisée est mise à adhérer sur un substrat ou un composant de système avec un matériau adhésif ignifugeant.

FIG 1

FIG 2

FIG 3

FIG 4

FIG 5

# Burn-through Test Results (Flame penetration)

**25um**  Fig 6

**40um**  Fig 8

0 min

0 min

Fig 7

Fig 9

6 min

6 min

Graphite sheet (25um,40um) can meet FAA requirement

Fig 10

# Burnthrough Test Results (Heat Flux)

Graphite sheet (25um,40um) can meet FAA requirement

# Fig 11

# Picture frame test (4min)

EP 2 257 344 B1

EP 2 257 344 B1

Fig 12

# Picture frame test (4min)

# Picture frame test (6min)

Fig 13

# Picture frame test (6min)

Fig 14

EP 2 257 344 B1

| 100 μm a sheet of Natural graphite (0.45) | 250 μm a sheet of Natural graphite (0.45) | 25 μm graphitized polymer sheet (0.35) | |
| 40 μm graphitized polymer sheet before pressing (0.45) | 40 μm graphitized polymer sheet (0.35) | Ceramic paper (0.89) | |

Fig 15

# Picture Frame Test (Heat Flux)

Graphitized polymer sheets have lower heat flux on the cold side of test specimen in comparison with Nextel.

EP 2 257 344 B1

Fig 16

# Picture Frame Test (Temperature)

Graphitized polymer sheets have lower temperature on the cold side of test specimen.

EP 2 257 344 B1

A sheet of Natural graphite (200 μm) Pressure changes during vacuum annealing (TDS)

5mm x 5mm sample was evaluated

Fig 17

A sheet of Natural graphite (200 μm)　3D-MASS

Time [min]

5mm x 5mm sample was evaluated

Fig 18

# A sheet of Natural graphite (200 μm)  3D-MASS  Fig 19

**molecular weight  0~25**

**molecular weight  25~50**

**molecular weight  50~75**

**molecular weight  75~100**

## Graphitized polymer sheet (40 μm)　Pressure changes during vacuum annealing (TDS)

5mm x 5mm sample was evaluated

Fig 20

## Graphitized polymer sheet（40μm）　　3D-MASS

5mm角サンプルで測定　　Fig 21

# Graphitized polymer sheet(40 $\mu$ m)    3D-MASS    Fig 22

molecular weight   0~25

molecular weight   25~50

molecular weight   50~75

molecular weight   75~100

EP 2 257 344 B1

## A sheet of Natural graphite (200 $\mu$ m) TG-DTA (In N$_2$)

Maximum temp: 1000°C    temperature elevation rate : 10°C/min   atmospehere:

N2(200mL/min flow)

Fig 23

0.17 % of weight loss was observed under nitrogen atmosphere

DTG ug/min

DTA mV

TG %

Temp Cel

EP 2 257 344 B1

Fig 24

Graphitized polymer sheet (40 μm)　TG-DTA

Maximum temp : 1000°C, temperature elevation rate : 10°C/min, atmosphere : N2 (200mL/min flow)

Almost no change in weight loss was observed under nitrogen atmosphere

Electromagnetic shielding effect

Fig 25

(KEC method : 1-18 GHz)

- Polyimide graphite sheet (40um)
- A sheet of Natural graphite (200um)
- Cupper foil (35um)
- ·×· Measuring limit attributed to measurement system

Sheilding effect (dB)

Frequency (Hz)

EP 2 257 344 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6670291 B
- US 6245400 B
- US 3404061 A
- US 6143218 A
- US 20070032589 A
- US 2008050305 A1
- US 4935281 A

**Non-patent literature cited in the description**

- *Journal of Polymer Science,* 1965, vol. 3, 1373-1390
- Aircraft Materials Fire Test Handbook by Federal Aviation Administration Fire Safety (FAA. Test Method To Determine the Burn-through Resistance of Thermal/Acoustic Insulation Materials. 31 July 2003, vol. 68
- Aircraft Materials Fire Test Handbook by Federal Aviation Administration Fire Safety (FAA. Test Method To Determine the Burnthrough Resistance of Thermal/Acoustic Insulation Materials. 31 July 2003, vol. 68